# EUROPÄISCHE PATENTANMELDUNG

(11) **EP 3 660 992 A1**
(43) Veröffentlichungstag der Anmeldung: **03.06.2020**
(21) Anmeldenummer: 19205652.1
(22) Anmeldetag: 28.10.2019
(51) Int. Cl.: H02G 1/08, G02B 6/44, H02G 9/10

(54) **ANSCHLUSSGEHÄUSEVORRICHTUNG**

(30) Priorität: 29.11.2018 EP 18209245; 19.03.2019 DE 202019001267 U; 06.06.2019 DE 202019002446 U
(71) Anmelder: Hauff-Technik GmbH & Co. KG, 89568 Hermaringen (DE)
(72) Erfinder: SCHEURING, Horst, 89542 Herbrechtingen (DE); SCHMID, Jörg, 89129 Langenau (DE); KURZ, Ralf, 89537 Giengen (DE)
(74) Vertreter: König Szynka Tilmann von Renesse Patentanwälte Partnerschaft mbB

(57) **Zusammenfassung**

Die Erfindung betrifft eine Verwendung einer Anschlussgehäusevorrichtung (100), welche ein zum Anschließen eines Kabels (30) vorgesehenes Kabelgehäuse (101), einen zur Aufnahme des Kabelgehäuses (101) vorgesehenen Dichtbehälter (70), und ein zur Aufnahme des Dichtbehälters (70) vorgesehenes Anschlussgehäuse (2) aufweist, wobei das Anschlussgehäuse (2) einen Gehäuseinnenraum (4) begrenzt, der über eine Öffnung (5) in dem Anschlussgehäuse (2) zugänglich ist, bei welcher Verwendung das Anschlussgehäuse (2) solchermaßen in einen Boden eingebaut wird, dass der Gehäuseinnenraum (4) von oben über die Öffnung (5) in dem Anschlussgehäuse (2) zugänglich bleibt, wobei ein in dem Boden verlegtes Kabel (30) in das Anschlussgehäuse (2) hineinverlegt und an das Kabelgehäuse (101) angeschlossen wird, und wobei dann der Dichtbehälter (70) mit dem Kabelgehäuse (101) darin solchermaßen in dem Anschlussgehäuse (2) angeordnet wird, dass der Dichtbehälter (70) das Kabelgehäuse (101) in einem Luftvolumen (130) hält.

## Beschreibung

Die vorliegende Erfindung betrifft eine Anschlussgehäusevorrichtung bzw. deren Verwendung zum Einbauen in den Boden.

Wie nachstehend im Einzelnen deutlich wird, kann die Anschlussgehäusevorrichtung speziell auf dem letzten Teilstück eines Datenkabelnetzes Anwendung finden, bspw. zur Anbindung eines Gebäudes an eine Datenkabel-Verzweigungsstelle.

Bei letzterer kann es sich insbesondere um einen Abzweig aus einem Strang handeln, der bspw. entlang einer Straße im Boden verläuft. Die vorliegend diskutierte Anschlussgehäusevorrichtung kann in einer solchen Situation zwischen dem Abzweig und dem Gebäude platziert werden, was dessen Erschließung, also Anbindung an das Datenkabelnetz vereinfachen kann. Dies ist Teil des Erfindungsgegenstands, wird jedoch im Folgenden vorab kurz umrissen, weil sich vor dem Hintergrund dieser Anwendung die Funktion der Anschlussgehäusevorrichtung besser nachvollziehen lässt.

In der Anwendung, die wie gesagt Erfindungsgegenstand ist, wird das Anschlussgehäuse derart im Boden, bspw. im Bereich einer Straße platziert, dass der Gehäuseinnenraum nach Herstellung des Boden- bzw. Straßenaufbaus noch von oben zugänglich ist. Vor der Herstellung des Boden-/Straßenaufbaus, also vor dem Aufschütten eines im Zuge der Datennetzerschließung ausgehobenen Grabens, wird zwischen der Datenkabel-Verzweigungsstelle und dem Anschlussgehäuse ein Leerrohr verlegt. In einfachen Worten wird das Datenkabel bzw. das Leerrohr dafür also nicht direkt vom Abzweig zu einem jeweiligen Nutzer/Verteiler geführt, sondern über das Anschlussgehäuse. Dabei können sich je nach Anwendung unterschiedliche Vorteile ergeben, im Folgenden wird exemplarisch die Erschließung eines Wohngebäudes im Bestand diskutiert.

Bei einer Nachrüstung der Datenanbindung im Bestand, kann die Netzverlegung typischerweise für ganze Straßenzüge bzw. Orts- oder Stadtteile erfolgen. Es wird dann die Straße, bspw. der Gehweg, aufgegraben und z. B ein Kabelstrang verlegt, von dem bei jedem anzuschließenden Haushalt ein Kabel abgezweigt wird (an einer jeweiligen Datenkabel-Verzweigungsstelle). Der straßenseitige Graben wird dann wieder verfüllt und die zuvor aufgebrochene Deckschicht wird wiederhergestellt.

Die Erfinder haben festgestellt, dass sich hierbei jedoch meist nur der kleinere Teil der Anwohner bzw. Eigentümer für eine Nachrüstung sofort entscheidet (typischerweise 1/3). Weitere Anschlüsse werden dann erst später, nach und nach angefragt. Hierfür muss dann jeweils erneut aufgegraben, also insbesondere die Deckschicht aufgebrochen und ein Abzweig zu dem jeweiligen Gebäude verlegt werden, was erheblichen Aufwand bedeutet. Es muss ferner bei jeder Nachbelegung der Bodenaufbau dann auch wiederhergestellt werden (insbesondere die Deckschicht/der Belag).

Demgegenüber bietet das erfindungsgemäße Vorgehen die Möglichkeit, bei den vorerst noch nicht angeschlossenen Gebäuden jeweils ein Anschlussgehäuse zu setzen. Es kann dann entweder sogar bereits das Datenkabel bis in das Anschlussgehäuse verlegt und dort (vorerst) verwahrt werden, oder es kann das Anschlussgehäuse zumindest über das Leerrohr angebunden sein. Soll das Gebäude dann später (nach der eigentlichen Erschließung des Straßenzugs) doch noch angeschlossen werden, muss je nach Position des Anschlussgehäuses zumindest nicht der Gehweg/die Straße aufgegraben werden, mitunter ist auch gar kein Aufgraben notwendig (z. B wenn das Anschlussgehäuse direkt am Gebäude sitzt, siehe unten im Detail).

Auch wenn das Datenkabel nicht gleich bis in das Anschlussgehäuse vorverlegt wird, sondern dieses zunächst nur über das Leerrohr an die Datenkabel-Verzweigungsstelle angebunden ist, kann ein nachträgliches Anschließen des Gebäudes deutlich vereinfacht sein. Durch das Leerrohr kann dann nämlich das Datenkabel nachträglich eingeschoben bzw. -blasen werden, was bevorzugt von der Datenkabel-Verzweigungsstelle bzw. über diese erfolgt.

Der vorliegenden Erfindung liegt das technische Problem zugrunde, eine vorteilhafte Anschlussgehäusevorrichtung als Gegenstand einer Verwendung anzugeben.

Dies wird erfindungsgemäß mit der Verwendung gemäß Anspruch 1 gelöst. Dabei werden zusätzlich zu dem Anschlussgehäuse ein Kabelgehäuse und ein Dichtbehälter vorgesehen, wobei der Dichtbehälter das Kabelgehäuse aufnimmt. Der Dichtbehälter ist seinerseits so bemessen, dass er in dem Anschlussgehäuse, nämlich in dessen Gehäuseinnenraum Platz findet. Prinzipiell wäre zwar auch ein Hantieren innerhalb des Anschlussgehäuses denkbar, bevorzugt ist der Dichtbehälter jedoch so bemessen, dass er durch dessen Öffnung passt. Er lässt sich dann bspw. für ein vereinfachtes Hantieren nach oben durch die Öffnung aus dem Anschlussgehäuse herausnehmen und anschließend wieder einsetzen, siehe unten im Detail. Unabhängig davon im Einzelnen wird die Öffnung des Anschlussgehäuses, wenn der Dichtbehälter samt Kabelgehäuse im Anschlussgehäuse platziert ist, bevorzugt mit einem Deckel verschlossen. Dieser wird zum Hantieren an bzw. Herausnehmen des Dichtbehälters geöffnet. Zum Öffnen des Anschlussgehäuses wird der Deckel bevorzugt vollständig abgenommen, ist dann also nicht mehr mit dem Anschlussgehäuse verbunden, es gibt also bspw. kein verschmutzungsträchtiges Scharnier. Während der Deckel abgenommen wird, verbleibt der Dichtbehälter bevorzugt zunächst in dem Anschlussgehäuse, ist er also nicht mit Deckel gekoppelt. Er wird nach dem Abnehmen des Deckels herausgenommen, diese Entkopplung erlaubt z. B. eine vorsichtigere und damit kabelschonendere Handhabung.

Das ferner vorgesehene Kabelgehäuse dient dem Anschließen bzw. der Aufnahme eines Kabels, das außenseitig des Anschlussgehäuses im Boden verläuft und in das Anschlussgehäuse hineinverlegt wird bzw. ist. Dazu kann an das Anschlussgehäuses bspw. ein im Boden verlegtes Leerrohr angeschlossen werden, in dem dann das eigentliche Kabel verläuft, insbesondere ein Datenkabel (speziell Glasfaserkabel). Dieses Kabel wird an das Kabelgehäuse angeschlossen, also damit verbunden (z. B angesteckt) oder hineinverlegt (der in das Anschlussgehäuse eingeführte Endabschnitt des Kabels bzw. ein Teil davon). Das Hineinverlegen kann im einfachsten Fall einer bloßen Lagerung des Kabels dienen, das in dem Kabelgehäuse bspw. definiert schleifenförmig abgelegt werden kann. Wie nachstehend im Einzelnen diskutiert, kann das Kabelgehäuse aber insbesondere auch als Verbindungsstelle dienen, kann dort also bspw. eine Spleiß- und/oder eine Steckverbindung eines Glasfaserkabels geschaffen werden. Die gewünschte Funktionalität des Kabelgehäuses kann anwendungsabhängig variieren, vergleiche die nachstehenden Anmerkungen.

Erfindungsgemäß wird nun nicht einfach das Kabelgehäuse dicht ausgeführt (was möglich, aber nicht obligatorisch ist), sondern wird mit dem Dichtbehälter ein zusätzliches Teil vorgesehen. Der Dichtbehälter nimmt dann das Kabelgehäuse auf, sodass dieses im Dichtbehälter in einem Luftvolumen gehalten ist. Auch wenn das Vorsehen dieses Zusatzteils zunächst einen Mehraufwand bedeuten kann, überwiegen in der Gesamtschau die Vorteile. Es kann sich bspw. eine gewisse Modularität ergeben, baugleiche Dichtbehälter lassen sich anwendungsspezifisch mit unterschiedlichen Kabelgehäusen ausstatten. Ferner kann das Kabelgehäuse, da es nicht zwingend eine Dichtfunktion übernehmen muss, für sich auch vereinfacht sein, es kann insbesondere auch ein ansonsten nur für Innenraumanwendungen ausgelegtes Kabelgehäuse Anwendung finden. Da für die "Kabelfunktionen", also das Ablegen bzw. Verbinden/Verteilen etc., auf Innenraum-Kabelgehäuse zurückgegriffen werden kann, können sich bspw. Kostenvorteile ergeben.

Weitere bevorzugte Ausführungsformen sind Gegenstand der abhängigen Ansprüche sowie der gesamten Beschreibung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Im Allgemeinen könnte das Kabelgehäuse auch in dem Dichtbehälter angeordnet sein, wenn das Kabel hineinverlegt wird. Bevorzugt erfolgt dies jedoch außerhalb des Dichtbehälters, werden also zunächst die Kabelarbeiten an dem Kabelgehäuse abgeschlossen und wird dieses dann in den Dichtbehälter eingesetzt. Das Kabelgehäuse kann dazu zuvor aus dem Dichtbehälter herausgenommen werden, es kann aber auch nach den Kabelarbeiten erstmalig in diesen eingesetzt werden. Der Monteur kann bspw. ein anwendungsspezifisch passendes Kabelgehäuse mitbringen und dieses nach Abschluss der Kabelarbeiten in den Dichtbehälter einsetzen. Wird dann bspw. später ein weiteres Kabel angeschlossen, kann das Kabelgehäuse hierbei im Allgemeinen auch in dem Dichtbehälter verbleiben (z. B wenn das weitere Kabel angesteckt wird), bevorzugt wird es erneut herausgenommen.

In bevorzugter Ausgestaltung wird auch der Dichtbehälter beim Einsetzen des Kabelgehäuses außerhalb des Anschlussgehäuses gehandhabt, wird nach Abschluss der Kabelarbeiten also zuerst das Kabelgehäuse in den Dichtbehälter eingesetzt und dann dieser im Anschlussgehäuse platziert (in dessen Gehäuseinnenraum). Der Dichtbehälter wird von oben (im ortsfesten Koordinatensystem, siehe nachstehend), durch die Öffnung in das Anschlussgehäuse eingesetzt, was erstmalig oder nach einem vorherigen Herausnehmen erfolgen kann (bei einer Vorinstallation, siehe übernächster Absatz). Insgesamt muss damit innerhalb des Anschlussgehäuses weniger hantiert werden, was komfortabler sein bzw. auch eine kompaktere Bauweise ermöglichen kann.

Das Kabelgehäuse ist in dem Dichtbehälter "in einem Luftvolumen gehalten", bliebe also auch trocken, wenn der Wasserspiegel bis über den Dichtbehälter ansteigen würde. Dies ließe sich im Allgemeinen bspw. auch erreichen, wenn das Kabel durch eine oben liegende Öffnung in den Dichtbehälter eingeführt und diese Öffnung dicht verschlossen wird, z. B mit einer Tülle. Bevorzugt wird ein topfförmiger Dichtbehälter (siehe unten im Detail) mit seiner offenen Seite nach unten weisend platziert, sodass er das Kabelgehäuse in dem Luftvolumen, also in einer Luftblase hält.

Bei einer Vorinstallation des Anschlussgehäuses, wenn dieses also im Boden platziert wird, die eigentliche Kabelverlegung dann aber erst später erfolgt, kann mit dem Anschlussgehäuse auch bereits der Dichtbehälter installiert werden. Nach dieser Vorinstallation ist also das Anschlussgehäuse in den Boden eingebaut, ist der Dichtbehälter im Gehäuseinnenraum angeordnet und ist die Öffnung des Anschlussgehäuses verschlossen. Soll dann später ein Kabel verlegt werden, wird diese geöffnet und kann der Dichtbehälter zur Installation herausgenommen werden. Der mit der Kabelverlegung befasste Monteur kann sich dann auf die "Kabelfunktionen" konzentrieren, für das Gewerk "Abdichtung" wird ihm der Dichtbehälter als Teil der Vorinstallation an die Hand gegeben.

Im Falle des Dichtbehälters beziehen sich die Angaben "oben", "unten" und "seitlich" auf das Koordinatensystem des Dichtbehälters, der im Falle der bevorzugten Topfform per definitionem nach oben offen ist. Bei der bevorzugten Topfform weist er eine Seitenwand und unten eine Bodenwand auf; diese Wände sind bevorzugt monolithisch miteinander, also aus demselben unterbrechungsfrei durchgehenden Material geformt, insbesondere als Spritzgussteil. Im Koordinatensystem des Dichtbehälters betrachtet wird das Kabelgehäuse also von oben nach unten durch die Öffnung des Dichtbehälters in den Dichtbehälter eingesetzt (was aber keine Implikation hinsichtlich einer Orientierung relativ zur Erdoberfläche hat). Der topfförmige Dichtbehälter wird dann bevorzugt umgedreht im Anschlussgehäuse platziert, also mit seiner Bodenwand nach oben und der Öffnung nach unten weisend (im Koordinatensystem der Erdoberfläche betrachtet, auch als "ortsfest" bezeichnet). In der damit eingeschlossenen Luftblase ist das Kabelgehäuse auch unabhängig von einem Dichtelement vor ansteigendem Wasser geschützt. Generell kann das Innenvolumen des Dichtbehälters, also der eingeschlossenen Luftblase bspw. mindestens 1 l, 2 l bzw. 3 l betragen, mögliche Obergrenzen können (davon unabhängig) bspw. bei höchstens 10 l, 8 l bzw. 7 l liegen.

Gemäß einer bevorzugten Ausführungsform wird an den Dichtbehälter ein Ansetzteil angesetzt, und zwar von dessen offener Seite her, also im Koordinatensystem des Dichtbehälters von oben. Das Ansetzteil wird an oder in der Öffnung des Dichtbehälters platziert, bevorzugt erstreckt es sich in den Dichtbehälter hinein. Das Ansetzteil kann einen Deckel bilden, die Öffnung im Dichtbehälter also axial gesehen zumindest im Wesentlichen bedecken. Das Ansetzteil wird an dem Dichtbehälter befestigt, was im Allgemeinen bspw. auch mit einer Schraube oder einem Schnappverschluss erfolgen kann. Bildet eine Pressdichtung das Ansetzteil (siehe unten), ist das Befestigen z. B ein kraftschlüssiges Verspreizen. Bevorzugt ist ein Verrasten, das z. B eine schnelle und reproduzierbar gute Montage ermöglichen kann (bspw. Montagekontrolle durch Klick-Geräusch).

Dazu kann an dem Ansetzteil bspw. ein sich axial erstreckender Steg mit einer radial hervortretenden Rastnase vorgesehen sein, bspw. einer nach radial innen hervortretenden und entsprechend in die Außenwandfläche des Dichtbehälters eingreifenden Rastnase. Ein solcher Stege erstreckt sich dann bevorzugt auch axial entgegengesetzt über einen Aufhängungspunkt hinaus, sodass er eine Wippe bildet. Zum Lösen der Rastverbindung kann der der Rastnase entgegengesetzte Abschnitt radial betätigt werden, sodass die Rastnase wippenartig aus dem formschlüssigen Eingriff gehoben wird. Greift die Rastnase in die Außenwandfläche, wird der Abschnitt zum Lösen nach radial innen gedrückt und damit die Rastnase nach radial außen gehoben. Bevorzugt gibt es mindestens 2 Rastmittel, mit möglichen Obergrenzen bei z. B höchstens 4 oder 3 Rastmitteln; besonders bevorzugt sind genau 2 Rastmittel, auch mit Blick auf die Handhabung bei der Montage. Das Ansetzteil kann bspw. auch einen axial hervortretenden Kragen aufweisen, der sich dann an einer Innenwandfläche des Dichtbehälters abstützt. Dies kann z. B einen stabilen Halt ermöglichen bzw. auf das Hineinrutschen des Ansetzteils in seinen Dichtsitz begünstigen.

Im Allgemeinen kann in dem Dichtbehälter ein Haltemittel vorgesehen sein, welches das eingesetzte Kabelgehäuse dann in Position hält. Das Haltemittel kann z. B an einer Innenwandfläche des Dichtbehälters vorgesehen, bspw. seinerseits dort befestigt oder vorzugsweise direkt angeformt sein. Letzteres meint, dass die Wand des Dichtbehälters und das Haltemittel aus demselben, unterbrechungsfrei durchgehenden Material geformt sind, etwa als Spritzgussteil. Generell ist der Dichtbehälter bevorzugt aus einem Kunststoffmaterial vorgesehen, bspw. einem Hartkunststoff, z. B ABS. Die Wand kann sowohl eine Seiten- als auch eine Bodenwand sein, die Innenwandfläche kann also das Innenvolumen des Dichtbehälters zur Seite oder nach unten begrenzen. Das Haltemittel kann bspw. einen oder mehrere sich von der Innenwandfläche nach innen weg erhebende Stege aufweisen, zwischen denen das Kabelgehäuse dann gehalten ist. Ein solcher Steg kann insbesondere auch mit einem das eingesetzte Kabelgehäuse dann entgegen der Einsetzrichtung formschlüssig haltenden Rastmittel versehen sein, bspw. einer Rastnase.

Gemäß einer bevorzugten Ausführungsform wird das in dem Dichtbehälter angeordnete Anschlussgehäuse von dem an den Dichtbehälter angesetzten Ansetzteil zumindest abgestützt, vorzugsweise getragen. Hierbei meint "abstützen", dass das Ansetzteil das Kabelgehäuse in einen Sitz drückt, z. B einen Sitz an der Innenwandfläche des Dichtbehälters. Wird das Ansetzteil entfernt, kann das Kabelgehäuse aus diesem Sitz genommen werden, typischerweise axial. Bevorzugt stützt das Ansetzteil das Kabelgehäuse nicht nur ab, sondern trägt es das Kabelgehäuse. Das Kabelgehäuse ist dann auch unabhängig vom Dichtbehälter relativ zum Ansetzteil lagefixiert, es kann also bei der Montage und Demontage gemeinsam mit dem Ansetzteil gehandhabt werden. Im Allgemeinen kann auch das Ansetzteil selbst das Kabelgehäuse bilden, bevorzugt sind die beiden Teile zusammengesetzt.

Im Allgemeinen kann das Kabelgehäuse auch direkt mit dem Ansetzteil zusammengesetzt werden, kann also das Ansetzteil bspw. eine Aufnahme zum Einschieben des Kabelgehäuses oder eine Platte zum Festschrauben des Kabelgehäuses bilden. Bevorzugt wird das Kabelgehäuse über ein Adapterteil an dem Ansetzteil montiert, vorzugsweise über eine Adapterplatte. Auch wenn das Vorsehen mehrerer Einzelteile zunächst aufwendiger erscheint, kann es eine Modularität bzw. Flexibilität eröffnen oder auch den Montageablauf vereinfachen. So lässt sich das Adapterteil bspw. vorab am Kabelgehäuse befestigen, also vor den eigentlichen Kabelarbeiten. Während der Kabelverlegung, also wenn das Kabel an das Kabelgehäuse angeschlossen wird, kann die Einheit aus Kabelgehäuse und Adapterteil auch vom Ansetzteil gelöst gehandhabt werden, was bspw. die Zugänglichkeit verbessern kann. Vor dem Platzieren im Dichtbehälter muss dann lediglich das Adapter- an das Ansetzteil gesetzt werden, was aufgrund der vordefinierten Schnittstelle einfach möglich ist. Die in diesem Zeitpunkt, wenn also bereits das Kabel verlegt ist, vereinfachte Handhabung kann z. B einem Abknicken oder einer anderweitigen Beschädigung des Kabels vorbeugen helfen.

Umgekehrt kann das Adapterteil je nach Bedarf unterschiedliche Kabelgehäuse tragen, steht also eine entsprechend große Auswahl frei. Das Verbinden von Kabelgehäuse und Adapterteil kann dann z. B auch im Zuge einer Vorkonfektionierung erfolgen, also nicht bei der Montage vor Ort am Anschlussgehäuse. Dementsprechend kommt an dieser Stelle nicht nur ein Verrasten, sondern bspw. auch ein Verschrauben oder Verkleben etc. infrage. Unabhängig von der Verbindung zum Kabelgehäuse wird das Adapterteil mit dem Ansetzteil bevorzugt verrastet, bspw. mit einer axialen Aufschiebebewegung.

Generell werden das Ansetzteil und das Kabelgehäuse in bevorzugter Ausgestaltung gemeinsam gehandhabt, ist also das Kabelgehäuse bereits am Ansetzteil platziert wenn Letzteres an den Dichtbehälter gesetzt wird (bevorzugt mittels eines Adapterteils, siehe vorne). Ein Monteur kann diese Einheit vorteilhafterweise am Ansetzteil greifen und das Kabelgehäuse im Dichtbehälter platzieren und dabei zugleich das Ansetzteil in seinen Sitz am Dichtbehälter bringen. Das vom Ansetzteil getragene Kabelgehäuse kann z. B auch dann von Vorteil sein, wenn das Kabelgehäuse zum Anschließen eines weiteren Datenkabels (siehe unten) aus dem Dichtbehälter genommen wird. In dieser Situation kann das (erste) Datenkabel bereits angeschlossen sein, könnte also ein undefiniertes Herausrutschen oder -fallen des Kabelgehäuses aus dem Dichtbehälter zu einer Kabelbeschädigung führen. Das von dem Ansetzteil getragene Kabelgehäuse kann hingegen definiert aus dem Dichtbehälter herausgenommen werden, der Monteur kann diese Einheit mit dem Lösen vom Dichtbehälter zuverlässig halten.

Alternativ zu dem Verrasten mit dem Dichtbehälter könnte das Ansetzteil im Allgemeinen bspw. auch als Pressdichtung ausgestaltet sein, also mit einem Elastomerkörper, der axial gestaucht wird. Dazu können an beiden Stirnseiten des Elastomerkörpers Presskörper (bspw. plattenförmige Pressplatten) angeordnet sein, die über einen oder mehrere Spannbolzen wirkverbunden sind. Durch Anziehen des/der Spannbolzen(s) werden die Presskörper aufeinander zubewegt und wird der Elastomerkörper gestaucht. Zuvor wird das Kabel durch eine Durchgangsöffnung im Elastomerkörper hindurch verlegt, dieser wird infolge des Stauchens dann dichtend gegen das Kabel gepresst. Dabei wird der Elastomerkörper auch mit einer Außenwandfläche dichtend angepresst, nämlich gegen die Innenwandfläche des Dichtbehälters. Die montierte Pressdichtung sitzt dann axial endseitig im Dichtbehälter, bevorzugt ist für das Einsetzen ein Anschlag vorgesehen. Bei der Variante "Pressdichtung" kann das Kabelgehäuse bspw. an einem Presskörper davon befestigt sein, könnte also bspw. ein Adapterteil / eine Adapterplatte am Presskörper befestigt sein und das Kabelgehäuse tragen.

Generell erfolgt die Kabelverlegung bevorzugt in einem Leerrohr, außerhalb und/oder auch innerhalb des Anschlussgehäuses. Es kann insbesondere zunächst das Leerrohr verlegt und dann das Datenkabel hindurchgeführt werden, bspw. eingeblasen werden. Im Allgemeinen kann ein im Boden verlegtes Leerrohr auch in das Anschlussgehäuse hineinverlegt werden, bevorzugt ist das im Gehäuseinnenraum zur Kabelführung vorgesehene Leerrohr jedoch ein gesondertes Leerrohrstück. Bevorzugt wird ein Ende des gehäuseinnenseitigen Leerrohres an dem Ansetzteil befestigt, also bspw. im Falle einer Pressdichtung als Ansetzteil in deren Elastomerkörper verspannt oder am Presskörper festgelegt. Im Falle des deckelartigen Ansetzteils, das bevorzugt am Dichtbehälter verrastet wird, kann in dem Deckel bspw. eine Durchtrittsöffnungen für das Kabel vorgesehen sein und das Leerrohr in oder an dieser Öffnung befestigt werden. Die Befestigung am Ansetzteil kann vor oder nach der Kabelverlegung erfolgen; bevorzugt ist ersteres, weil so einer Beschädigung des Kabels vorgebeugt werden kann.

Gemäß einer bevorzugten Ausführungsform wird das gehäuseinnenseitige Leerrohr mithilfe eines Befestigungsaufsatzes am Ansetzteil befestigt, der eine Schneide aufweist. Der Befestigungsaufsatz wird dabei so auf das Leerrohr gesetzt, dass diese Schneide axial formschlüssig an dem Leerrohr sitzt, also bspw. dessen Mantelwand eindrückt bzw. in diese eindringt. Die Eindrück- bzw. Einschnittlinie liegt dabei gewinkelt, vorzugsweise senkrecht zur Längs- bzw. Axialrichtung des Hohlrohres, sodass der Befestigungsaufsatz in seiner Axialposition festgelegt ist. Indem sich der Befestigungsaufsatz seinerseits am Ansetzteil abstützt, hält er das Leerrohr relativ dazu in Position. Alternativ zu dem Eindrücken/- schneiden kann der Befestigungsaufsatz auch eine Erhebung der Mantelwand des Leerrohres hintergreifen, kann nämlich das Leerrohr bzw. dieser Abschnitt davon eine gewellte Außenwandfläche haben. Letzteres meint, dass die Außenwandfläche in einem Axialschnitt betrachtet (Schnittebene beinhaltet Leerrohrachse) mit Erhebungen und Vertiefungen verläuft, also wellenförmig, wobei die Innenwandfläche bevorzugt komplementär dazu gewellt ist. Das gewellte Rohr kann z. B auch wegen seiner Flexibilität von Vorteil sein, siehe unten im Detail. Unabhängig davon lässt es sich mit dem Befestigungsaufsatz auch gut befestigen, kann nämlich die Schneide axial formschlüssig zwischen zwei Erhebungen eingreifen.

Egal ob die Schneide die Mantelwand eindrückt oder in diese eindringt bzw. eine Erhebung hintergreift, ist an dem Ansetzteil bevorzugt eine Aufnahme ausgebildet, in welcher der Befestigungsaufsatz axial formschlüssig gehalten ist (in beiden Axialrichtungen). Bevorzugt wird er in diese Aufnahme radial eingeschoben und dabei zugleich auf das Leerrohr aufgeschoben. Im Falle des deckelartigen Ansetzteils ist diese Aufnahme bevorzugt an der dem Innenvolumen des Dichtbehälters abgewandten Seite des Deckels ausgebildet.

Generell kann die Befestigung mittels Befestigungsaufsatz auch eine Flexibilität hinsichtlich der Leerrohr-Durchmesser eröffnen. Es können bspw. auch mehrere Befestigungsaufsätze vorgesehen werden, die sich im jeweiligen Leerrohr-Durchmesser, für den sie ausgelegt sind, unterscheiden, jedoch baugleich hinsichtlich ihrer Schnittstelle zum Ansetzteil sind. Die Befestigungsaufsätze können also in dieselbe Aufnahme am Ansetzteil passen (axial formschlüssig darin gehalten sein), wobei in Abhängigkeit vom Leerrohr-Durchmesser der entsprechende Befestigungsaufsatz ausgewählt und eingesetzt wird.

Unabhängig davon im Einzelnen umschließt die Schneide des Befestigungsaufsatzes das Leerrohr bevorzugt über mehr als einen halben Umlauf (bezogen auf die Leerrohrachse), also über mehr als 180°, bspw. mindestens 200° bzw. 220°. Mögliche Obergrenzen können bspw. bei höchstens 320°, 300°, 280° bzw. 260° liegen, sodass sich der Befestigungsaufsatz gut auf das Leerrohr aufklipsen lässt. Generell ist der Befestigungsaufsatz bevorzugt ein für sich einstückiges Teil (nicht zerstörungsfrei auftrennbar), besonders bevorzugt ein monolithisches Teil (aus einem unterbrechungsfrei durchgehenden Material geformt, ohne Materialgrenzen im Inneren). Bevorzugt handelt es sich um ein Kunststoffteil, besonders bevorzugt ein Kunststoff-Spritzgußteil.

Gemäß einer bevorzugten Ausführungsform wird bzw. ist ein Elastomermantel vorgesehen, der die offene Seite des Dichtbehälters bedeckt. Der Elastomermantel kann einen oder mehrere Durchtritte für die Kabel haben, insbesondere für das bzw. die gehäuseinnenseitigen Leerrohre. Ein solcher Durchtritt kann z. B tüllenförmig ausgebildet sein, sich also als Rohrabschnitt erstrecken, vorzugsweise von dem Dichtbehälter weg. Wird das Kabel bzw. Leerrohr hindurch verlegt, legt sich diese Tülle dichtend an. Sie kann bspw. auch zunächst mit einem Blindverschluss verschlossen sein, der dann geöffnet wird, bspw. mit dem Leerrohr oder Datenkabel ausgestoßen wird.

Der Elastomermantel kann einen umlaufenden Rand bzw. Kragen haben, als bspw. sackförmig sein, wobei am Sackboden die Tülle(n) angeordnet ist/sind. Der umlaufende Rand bzw. Kragen wird an dem Dichtbehälter befestigt. Dazu kann am offenen Ende des Dichtbehälters bspw. ein Flansch vorgesehen sein (siehe unten), auf welchen der Elastomermantel aufgezogen wird. Ebenso kann der Elastomermantel von dem Ansetzteil kraft- und/oder formschlüssig angedrückt werden, bevorzugt an einen Flansch des Dichtbehälters. Vorteilhaft kann eine Kombination des Elastomermantels mit einem vorstehend geschilderten, verrastenden Ansetzteil sein. Das Ansetzteil kann den Dichtbehälter bspw. umgreifen und den Elastomermantel in einer dichten Anlage an der Außenfläche des Dichtbehälters befestigen. Ebenso kann das Ansetzteil den Elastomermantel aber bspw. auch gegen die Innenwandfläche des Dichtbehälters dichten.

Das Elastomermaterial, aus dem der Elastomermantel vorgesehen ist kann ganz allgemein ein Kunststoff mit elastischem Verhalten sein. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer.

Der topfförmige Dichtbehälter kann allgemein, also auch unabhängig von dem Elastomermantel, an der offenen Seite mit einem nach außen hervortretenden Flansch vorgesehen sein, der sich also von der Seitenwand weg nach radial außen erstreckt. Im Falle des Dichtbehälters beziehen sich "axial", "radial" und "umlaufend" auf eine Mittenachse des Dichtbehälters, um welche bspw. eine Seitenwand des Dichtbehälters drehsymmetrisch sein kann. Die Mittenachse erstreckt sich mittig im Innenraum des Dichtbehälters und tritt mittig aus dessen Öffnung hervor. Der sich nach außen erhebende Flansch erstreckt sich von der Mittenachse weg.

In Verbindung mit der Pressdichtung kann der Flansch bspw. die Stabilität betreffend von Vorteil sein, also die Seitenwand hinsichtlich der Anpresskraft des Elastomerkörpers verstärken. Unabhängig davon könnte Flansch aber bspw. auch der Montage des Dichtbehälters im Anschlussgehäuse dienen, der Dichtbehälter kann über den Flansch aufgehängt oder vorzugsweise mit dem Flansch abgestellt werden. Wie bereits erwähnt, wird der Dichtbehälter bevorzugt mit der offenen Seite nach unten im Anschlussgehäuse platziert, wobei dann auch der Flansch unten angeordnet ist und eine Standfläche bilden kann ("unten" bezieht sich hier jeweils auf das ortsfeste Koordinatensystem).

Generell wird der topfförmige Dichtbehälter in bevorzugter Ausgestaltung umgedreht im Anschlussgehäuse platziert, also im ortsfesten Koordinatensystem betrachtet mit seiner Bodenwand nach oben und der Öffnung nach unten weisend, siehe vorne. Ist der Dichtbehälter an seiner offenen Seite mit einem Flansch versehen, kann dieser Flansch bspw. auf einer Halterung abgestellt werden, also der Dichtbehälter mit dem Flansch darauf aufliegen.

Bevorzugt weist der Dichtbehälter einen Vorsprung auf, an dem er in dem Anschlussgehäuse aufgehängt wird. Der Vorsprung könnte im Allgemeinen auch als vollständig umlaufender Flansch ausgebildet sein; bevorzugt gibt es einen ersten und einen zweiten Vorsprung, der zu dem ersten Vorsprung radial entgegengesetzt hervortritt. Der bzw. die Vorsprünge sind dem offenen Ende des Dichtbehälters bevorzugt axial entgegengesetzt am Dichtbehälter angeordnet, also im ortsfesten Koordinatensystem an dessen oberen Ende (bei verdrehter Montage). Damit ist dieser Aufhängungspunkt für einen Monteur gut zugänglich, kann er also bspw. die korrekte Positionierung des Dichtbehälters per Sichtkontrolle überprüfen, bevor er das Anschlussgehäuse verschließt.

Der Vorsprung kann bspw. in einer Vertiefung der Anlagefläche angeordnet werden, auf welcher der Deckel des Anschlussgehäuses aufliegt (und im Zuge des Verschließens angedrückt wird). Dies kann auch eine Kontrolloption dahingehend eröffnen, dass sich der Deckel nur dann sauber positionieren lässt, wenn der Vorsprung des Dichtbehälters ordnungsgemäß platziert ist. Generell, egal ob an einem Vorsprung aufgehängt oder auf einen Flansch gestellt, wird der Dichtbehälter bevorzugt solchermaßen in dem Anschlussgehäuse platziert, dass im fertig montierten Zustand sein unteres Ende gegenüber einem unteren Ende des Gehäuseinnenraums das Anschlussgehäuse nach oben versetzt ist.

Der Dichtbehälter wird also jedenfalls nicht direkt auf dem Boden des Anschlussgehäuses abgestellt, sondern aufgehängt oder bspw. auf einer Halterung abgestellt. Diese kann bspw. auch an einer Seitenwand des Anschlussgehäuses vorgesehen sein, z. B angeformt (aus demselben durchgehenden Material geformt, siehe vorne) oder angesetzt und bspw. mit einer Schraube befestigt. Der Dichtbehälter kann vom unteren Ende des Gehäuseinnenraums bspw. um mindestens 10 cm bzw. 20 cm beabstandet sein, mögliche Obergrenzen können bspw. bei höchstens 50 cm bzw. 40 cm liegen. Der im Gehäuseinnenraum nach oben versetzte Dichtbehälter kann in Verbindung mit der umgedrehten Anordnung (Öffnung zeigt im ortsfesten Koordinatensystem nach unten) bspw. dahingehend von Vorteil sein, dass die Kabel nach unten ohne Knickgefahr aus dem Dichtbehälter herausgeführt werden können.

Gemäß einer bevorzugten Ausführungsform hat ein Leerrohr, in dem das Kabel bzw. Datenkabel gehäuseinnenseitig geführt ist (siehe vorne), zumindest abschnittsweise eine gewellte Außenwandfläche und/oder eine Spiralform. Bezüglich möglicher geometrischer Details des Leerrohres mit gewellter Außenwandfläche wird auf die vorstehenden Anmerkungen verwiesen, das gewellte Leerrohr kann aber auch unabhängig von der dort beschriebenen Befestigung mittels Befestigungsaufsatz von Interesse sein. Es kann sich nämlich besonders gut schleifenförmig ablegen lassen, sodass es umgekehrt mit einer gewissen Überlänge vorgesehen werden kann. Gleiches gilt für das Spiralrohr, das aus seiner Spiralform, die bspw. mittels einer Wärmebehandlung vorgegeben sein kann, ausgezogen werden kann und diese dann wieder selbsttätig einnimmt. Auch das Spiralrohr lässt sich besonders gut im Gehäuseinnenraum ablegen, kann also entsprechend eine Überlänge haben. Generell soll "Rohr" keine Implikation hinsichtlich einer bestimmten Steifigkeit haben, die Begriffe Well- und Spiralrohr umfassen also auch Well- und Spiralschläuche.

Generell wird das gehäuseinnenseitige Leerrohr (egal ob Spiralrohr, Wellrohr oder glattes Rohr), mit dem das Kabelgehäuse und/oder der Dichtbehälter angeschlossen wird, in bevorzugter Ausgestaltung mit einer Überlänge vorgesehen. Bei einem solchen Leerrohr mit "Überlänge", das an dem Dichtbehälter und/oder Kabelgehäuse befestigt ist, können Montagearbeiten bevorzugt derart erfolgen, dass der Dichtbehälter und/oder das Kabelgehäuse mit daran befestigtem Leerrohr nach oben aus dem Anschlussgehäuse heraus genommen werden kann bzw. können. Es kann also bspw. der Dichtbehälter samt angesetztem Leerrohr herausgehoben und dann komfortabel, also nicht unter beengten Raumverhältnissen mit den eigentlichen Kabelarbeiten begonnen werden, was z. B auch einer Beschädigung des Datenkabels vorbeugen kann. Dieses ist beim Herausheben nämlich im Leerrohr geschützt. Das Leerrohr kann im Allgemeinen auch von der Datenkabel-Verzweigungsstelle weg ins Anschlussgehäuse hinein verlegt werden (mit Überlänge). Bevorzugt handelt es sich jedoch um ein Rohrstück, bevorzugt ein gewelltes Rohr und/oder Spiralrohr, das gehäuseinnenseitig an eine Anschlussstelle gesetzt wird, an welche gehäuseaußenseitig das von der Verzweigungsstelle kommende Leerrohr gesetzt wird bzw. ist (die Anschlussstelle kann z. B ein Fitting sein).

Bei einer bevorzugten Ausführungsform ist bzw. wird zusätzlich zu dem (ersten) Dichtbehälter ein zweiter Dichtbehälter in dem Anschlussgehäuse angeordnet. Dieser kann bevorzugt analog dem ersten Dichtbehälter ausgestaltet und montiert sein, es wird ausdrücklich auf die vorstehende Offenbarung verwiesen. Der zweite Dichtbehälter ist bevorzugt ebenfalls topfförmig vorgesehen und wird umgedreht montiert, also mit dem Topfboden nach oben (ortsfest betrachtet). Auch in dem zweiten Dichtbehälter wird bzw. ist bevorzugt ein Kabelgehäuse angeordnet.

Die Variante mit erstem und zweitem Dichtbehälter kann z. B ein vorteilhaftes Vorgehen dahingehend eröffnen, dass in einem ersten Schritt der Anbindung das Datenkabel von der Datenkabel-Verzweigungsstelle in das Anschlussgehäuse, und zwar konkret in das Kabelgehäuse verlegt wird, das im ersten Dichtbehälter angeordnet ist bzw. wird. Dort kann es bspw. mit einem Stecker verbunden, etwa gespleißt werden. Es kann also insbesondere mit einem Datenkabelstück verbunden sein, das an seinem dem Spleiß entgegengesetzten Ende einen Stecker hat. Dieser Stecker kann aus dem ersten Dichtbehälter heraus verlegt werden, und der erste Dichtbehälter wird dann verschlossen. Dazu kann bspw. ein Ansetzteil angesetzt werden, alternativ oder zusätzlich kann ein Elastomermantel Anwendung finden. Unabhängig von diesen Details kann der erste Dichtbehälter z. B auch verplombt werden, was eine saubere Abgrenzung hinsichtlich der Zuständig- und Verantwortlichkeiten schafft. Des Anschlussgehäuse wird dann geschlossen, die Vorverlegung ist damit abgeschlossen.

Soll dann später der Nutzer/Verteiler tatsächlich angebunden werden, wird das Anschlussgehäuse geöffnet und steht über dem Stecker ein Zugang zur Verfügung. Zwischen dem Anschlussgehäuse und dem Nutzer/Verteiler wird ein weiteres Datenkabel verlegt (siehe unten im Detail), z. B in einem Anschluss-Leerrohr. Der zweite Dichtbehälter und das Kabelgehäuse darin können dann bspw. ebenfalls zum Anspleißen eines Steckers genutzt werden, also eines Steckers am weiteren Datenkabel. Über diesen Stecker kann dann eine Verbindung mit dem im ersten Dichtbehälter angebunden Stecker hergestellt werden, die Steckverbindung kann bspw. auch innerhalb des zweiten Dichtbehälters platziert werden. Alternativ zum reinen Anspleißen eines Steckers kann der zweite Dichtbehälter bspw. auch ein "aktives Kabelgehäuse" aufnehmen, vgl. die nachstehenden Anmerkungen zu dessen möglichen Eigenschaften und Funktionen.

In allgemeinen Worten kann es von Vorteil und bevorzugt sein, in dem Anschlussgehäuse ein erstes und ein zweites Volumen zu haben, welche Volumina separat zugänglich sind. Bevorzugt sind bzw. werden diese Volumina jeweils für sich abgedichtet. Im Zuge der Anbindung des Anschlussgehäuses an die Datenkabel-Verzweigungsstelle wird in dem ersten Volumen eine Kabelverbindung hergestellt, insbesondere eine Spleißverbindung und/oder Steckverbindung. Im Zuge der Anbindung des Nutzers/Verteilers an das Anschlussgehäuse wird in dem zweiten Volumen einen Kabelverbindung hergestellt, insbesondere eine Spleiß- und/oder Steckverbindung. Die Volumina können bspw. in der vorstehend geschilderten Weise mit Dichtbehältern realisiert sein, sie können aber bspw. auch mit einem jeweils für sich wasserdichten Kabelgehäuse realisiert werden, oder mit einer Kombination aus einem Dichtbehälter und einem wasserdichten Kabelgehäuse. Dies kann auch unabhängig von der hauptanspruchsgemäßen Kombination aus Kabelgehäuse und Dichtbehälter von Interesse sein und soll in dieser Allgemeinheit offenbart sein.

Generell ist gemäß einer bevorzugten Ausführungsform das Kabelgehäuse ein Spleiß- und/oder Steckergehäuse. In allgemeinen Worten wird das Anschluss- bzw. Kabelgehäuse zum Herstellen einer Verbindungsstelle genutzt, vgl. die nachstehenden Ausführungen ("Verbindungsstelle in Anschlussgehäuse"). Bevorzugt findet sich nach der Montage des Kabels, also Glasfaserkabels, ein Spleiß in dem Kabelgehäuse, also eine typischerweise durch Lichtbogenschweißen hergestellte Verbindung. Bevorzugt kann das Kabel über den Spleiß mit einem an oder in dem Gehäuse angeordneten Stecker verbunden sein. Das Kabel lässt sich somit zuvor durch das Leerrohr in das Anschlussgehäuse einblasen, anschließend kann es mit dem Stecker verbunden werden. In diesem kann dann ein weiteres Kabel eingesteckt werden, mit dem die Verbindung zur Datennutzer- bzw. - verteilerstelle, insbesondere also dem Gebäude hergestellt wird.

Das Kabelgehäuse kann im Allgemeinen auch aktiv sein, also an eine elektrische Stromversorgung angeschlossen werden; ein entsprechendes Anschlusskabel kann dann analog dem Datenkabel durch das Dichtelement/den Elastomerkörper geführt in den Dichtbehälter verlegt werden. Ein aktives Kabelgehäuse kann z. B ein Konverter (Umsetzer) sein, mit dem das Glasfasersignal physikalisch in ein Signal eines anderen Mediums umgesetzt wird, bspw. ein Kabelsignal, insbesondere ein Kupferkabel- bzw. Ethernet-Signal. Das Kabelgehäuse kann bspw. auch ein WLAN-Modul sein, sodass direkt das Anschlussgehäuse selbst als WLAN-Zugangspunkt genutzt werden kann.

Andererseits kann aber auch ein passives Kabelgehäuse bevorzugt sein, an bzw. in dem verbunden bzw. gesteckt wird, das aber keine eigene Stromversorgung hat. Es kann dann bspw. derselbe Signaltyp in das Kabelgehäuse hinein und aus diesem heraus gelangen und im Kabelgehäuse z. B nur eine Verzweigung/Verbindung erfolgen.

Ein Glasfaserkabel kann bspw. einen Kabelmantel aufweisen, in dem die eigentliche Glasfaser verläuft, z. B gemeinsam mit einer Verstärkungsfaser, etwa einer Aramidfaser. Am Kabelgehäuse kann eine Auszugssicherung für das Glasfaserkabel geschaffen sein, kann also bspw. der Kabelmantel geöffnet und die Verstärkungsfaser herausgenommen und relativ zum Kabelgehäuse festgelegt sein, bspw. gewickelt oder geklemmt. Alternativ oder zusätzlich kann das Kabelgehäuse bspw. auch ein Ablagemittel aufweisen, z. B in seinem Innenraum Vorsprünge bzw. Stege aufweisen, an denen sich das Daten- bzw. Glasfaserkabel definiert schleifenförmig ablegen lässt. Alternativ oder zusätzlich kann das Kabelgehäuse auch eine Spleißablage aufweisen, also bspw. eine Lamellenstruktur, in welcher der Kabelspleiß abgelegt wird. Das Kabelgehäuse kann bevorzugt ein Steckergehäuse ein, weiter bevorzugt wird in seinem Inneren eine Spleißverbindung geschaffen, die das von der Datenkabel-Verzweigungsstelle kommende Datenkabel mit dem Stecker verbindet. Dazu kann der Stecker bevorzugt mit einem Datenkabel- bzw. Glasfaserkabelstück vorkonfektioniert sein, auch als Pigtail bezeichnet, das im Inneren des Kabelgehäuses angeordnet ist. Zum Herstellen der eben diskutierten Verbindung wird das Kabelgehäuse geöffnet und dieses Datenkabelstück mit dem von der Datenkabel-Verzweigungsstelle kommenden Datenkabel verbunden.

Das erfindungsgemäße Vorgehen ist nicht nur bei der eingangs diskutierten Erschließung im Bestand, sondern auch im Neubau von Vorteil. In einem Neubaugebiet mag es zwar auf den ersten Blick weniger aufwendig und kostengünstiger erscheinen, die einzelnen Gebäude bzw. Gebäudegrundflächen jeweils direkt anzuschließen, also das Datenkabel bzw. Leerrohr dafür von der Datenkabel-Verzweigungsstelle direkt bis zum Gebäude bzw. dessen Grundfläche zu verlegen. Die Erfinder haben jedoch festgestellt, dass der Baufortschritt auf den einzelnen Grundstücken in der Praxis erheblich divergieren kann, sodass einige Gebäude bspw. schon bezogen werden, während sich andere noch im Rohbaustadium befinden, wenn überhaupt. Der Netzbetreiber kann deshalb nicht in einem Zug das gesamte Gebiet erschließen, sondern wiederum nur nach und nach.

Das erfindungsgemäße Vorgehen eröffnet auch hier eine Möglichkeit der Vorverlegung, bspw. bis an das jeweilige Grundstück. Die Anschlussgehäuse können, wo später die Straße, insbesondere der Gehweg, verläuft platziert werden oder auf den Grundstücken, bspw. an den Grundstückgrenzen. Unabhängig von ihrer Position im Einzelnen kann der Netzbetreiber die einzelnen Datenkabel (für die einzelnen Gebäude bzw. Gebäudegrundflächen) dann in einem Zug bis in die Anschlussgehäuse verlegen, also in einem Arbeitsdurchgang (innerhalb eines Arbeitstages oder mehrerer zusammenhängender). Dieses Vorverlegen bis in die Anschlussgehäuse kann bspw. erfolgen, sobald der erste Haushalt seinen Datenanschluss erhält. Benötigen dann nach und nach die übrigen Haushalte ihren Datenanschluss, ist der Aufwand für die Verlegung dieser letzten Meter deutlich geringer als das Verlegen von der Datenkabel-Verzweigungsstelle aus bzw. über diese. Letzteres erfordert nämlich in der Regel mindestens zwei Techniker, die letzten Meter können auch von einem einzelnen Techniker verlegt werden.

Generell werden die Datenkabel bevorzugt von einem Knotenpunkt aus verlegt, an dem mehrere, also die einzelnen Datenkabelverzweigungsstellen zusammenlaufen. Von diesem Knotenpunkt kann sich z. B ein Kabel- bzw. Leerrohrstrang entlang der Straße erstrecken (im Erdreich), wobei an den Gebäuden (bzw. allgemein Nutzern/Verteilern) jeweils ein Kabel/Leerrohr abgeht. An dem übergeordneten Knotenpunkt kann bspw. ein Verteilerkasten (Spleißkasten) oder eine Spleißmuffe angeordnet sein. Zwischen dem Knotenpunkt und den einzelnen Gebäuden (Nutzern/Verteilern) kann eine gewisse Wegstrecke liegen, und die Datenkabel werden in der Regel mit einem Spezialwerkzeug in die Leerrohre eingeblasen und damit über entsprechend große Strecken vorgeschoben. In dieser Hinsicht kann das vorstehend geschilderte Vorgehen, also das Vorverlegen vorerst nicht benötigter Datenkabel in einem Arbeitsgang, insoweit von Vorteil sein, als dann das entsprechende Spezialwerkzeug (Einblasvorrichtung) nur einmal an dem Knotenpunkt bereitgestellt werden muss. Die Arbeiten am Knotenpunkt können auch hinsichtlich der Kabelverbindung/-verzweigung dort Spezialwerkzeug erfordern, bspw. einen Kabelspleißer im Falle der bevorzugten Glasfaserkabel. Auch dieser muss dann nur einmal samt entsprechend geschultem Personal bereitgestellt werden, jedenfalls am Knotenpunkt (mitunter auch generell, vgl. insbesondere die Variante "Stecker").

Im Falle eines Gebäudes als Nutzer/Verteiler sitzt das im Boden angeordnete Anschlussgehäuse außerhalb der Gebäudegrundfläche, also außerhalb der von dem Gebäude eingenommenen Fläche inklusive der Wände, also der nach den Außenmaßen genommene Brutto-Grundfläche. Diese kann kleiner sein als die überbaute Fläche (Dachüberstand). Das Anschlussgehäuse wird zwar außerhalb der Grundfläche platziert, kann jedoch durchaus innerhalb der überbauten Fläche liegen, bspw. im Falle eines direkt an der Gebäudeaußenwand platzierten Anschlussgehäuses. Letzteres kommt insbesondere bei einer Nachrüstung im Bestand in Betracht. Andererseits kann jedoch auch ein gewisser Mindestabstand zur Gebäudegrundfläche bevorzugt sein, bspw. von mindestens 1 m, 2 m bzw. 3 m. Mögliche Obergrenzen, die im Einzelnen auch von der Grundstücksgröße abhängen, können bspw. bei höchstens 50 m, 40 m, 30 m, 20 m, 15 m bzw. 10 m liegen.

Generell wird das Anschlussgehäuse in den Boden eingebaut, sodass die Öffnung nach Herstellung des Bodenaufbaus noch von oben zugänglich ist. Im fertig eingebauten Zustand liegt eine Oberkante des Anschlussgehäuses bevorzugt im Wesentlichen bündig mit einer Oberkante des Bodenaufbaus, bspw. um weniger als 3 cm, 2 cm bzw. 1 cm versetzt (im Rahmen der technisch üblichen Genauigkeit ist ein exakt bündiger Einbau bevorzugt, 0 cm). Bei dem Bodenaufbau kann es sich bei einer Platzierung im Gartenbereich z. B um eine Mutterboden-/Humusschicht handeln, ebenso kann das Anschlussgehäuse in Schüttgut, wie z. B Kies eingebettet werden. Ferner ist auch ein Eingießen möglich, kann um das Anschlussgehäuse herum also bspw. Beton aufgefüllt werden. Bevorzugt kann eine Positionierung des Anschlussgehäuses horizontal im Bereich einer Straße sein, sodass das Anschlussgehäuse mit dem Schichtaufbau der Straße vertikal fluchtend angeordnet ist. Ist die Straße fertiggestellt, sitzt das Anschlussgehäuse dann in dem Schichtaufbau der Straße (weil es zudem auf einer vertikalen Höhe innerhalb der fertigen Schichtaufbauhöhe platziert wird).

Der "Schichtaufbau" der Straße umfasst z. B eine Tragschicht, wobei auch mehrere aufeinandergesetzte Tragschichten möglich sind. Das Baustoffgemisch der Tragschicht kann insbesondere Schotter umfassen, dieser wird verdichtet. Darauf kommt eine Deckschicht, bspw. Asphalt oder Platten bzw. Pflastersteine, im Allgemeinen ist jedoch bspw. auch eine ungebundene Deckschicht möglich (eine Schotterschicht im Falle eines Schotterwegs). Das Platzieren im Schichtaufbau der Straße ist bspw. insoweit von Vorteil, als diese Schicht(en) verdichtet ist bzw. sind, also eine gute mechanische Stabilität bieten. Dies kann im vorliegenden Zusammenhang von Interesse sein, weil die Datenkabel bzw. die vergleichsweise dünnen Leerrohre dafür relativ empfindlich sind (Beschädigungsgefahr bei Setzungen). Der Schichtaufbau der Straße wird definiert verdichtet, was z. B mit einem dynamischen Plattendruckgerät und/oder einer Rammsonde (Gleichmäßigkeit der Verdichtung) überprüft werden kann (bzw. im Straßenbau überprüft wird) und dem Anschlussgehäuse zuverlässig Halt schafft.

Bei der Montage bzw. Herstellung des Schichtaufbaus der Straße wird dann also seitlich um das Anschlussgehäuse herum z. B eine Schotterschicht verdichtet, etwa mit einer Rüttelplatte. Bevorzugt gibt es mehrere aufeinander gesetzte, also nacheinander hergestellte Schotterschichten, die jeweils um das Anschlussgehäuse herum verdichtet werden. Das Anschlussgehäuse ist dann, speziell nach Aufbringen der Deckschicht, definiert und stabil eingebaut. Der Begriff "Straße" umfasst hierbei sowohl die Fahrbahn als auch den Gehweg, weitere Bestandteile können ein Radweg und auch Mittel- bzw. Seitenstreifen (Überland/Autobahn) sein. Prinzipiell kann das Anschlussgehäuse bei einer Positionierung im Straßenbereich in jedem der genannten Bereiche platziert werden (im Bereich der Fahrbahn oder des Radwegs oder des Mittel-/Seitenstreifens oder des Gehwegs), bevorzugt ist bei einer üblichen Bebauung im örtlichen/städtischen Bereich eine Positionierung im Bereich des Gehwegs, besonders bevorzugt an der Grundstücksgrenze (am Straßenrand).

Mit Blick auf die bevorzugten Glasfaserkabel, die bestimmte minimale Biegeradien haben (Bruchgefahr), kann die Öffnung des Anschlussgehäuses bevorzugt gewisse Mindestmaße haben. Eine mittlere Öffnungsweite, die sich als Mittelwert der größten und kleinsten horizontalen Erstreckung der Öffnung ergibt und im bevorzugten Fall der Kreisform dem Kreisdurchmesser entspricht, kann bspw. bei mindestens 5 cm liegen, weiter und besonders bevorzugt mindestens 10 cm bzw. 12 cm. Mögliche Obergrenzen können (davon unabhängig) bspw. bei höchstens 40 cm, 30 cm bzw. 25 cm liegen. Der Deckel ist dann der Öffnung entsprechend bemessen.

Wie vorstehend dargelegt, können sich vielfältige Vorteile ergeben, wenn die "Datennutzer- oder -verteilerstelle" ein Gebäude ist, bspw. ein Büro- oder Wohngebäude, wobei sowohl ein Mehrfamilienhaus als auch insbesondere ein Einfamilienhaus infrage kommt. Bei der "Datennutzer- bzw. -verteilerstelle" kann es sich jedoch auch um eine Antennenstation bzw. -einheit handeln, bspw. für öffentliches WLAN. Eine solche Antenneneinheit kann für sich (freistehend) vorgesehen sein, sie kann aber bspw. auch Teil einer Straßenlaterne oder Ampel sein (angesetzt oder auch baulich integriert).

Im fertig montierten Zustand ist die Antenneneinheit dann mittels des Datenkabels über die Datenkabel-Verzweigungsstelle mit dem Knotenpunkt verbunden, über das Datenkabel werden Daten zu und auch von der Antenneneinheit übertragen, diese setzt das drahtgebundene Signal in ein Funksignal um. Dies kann auch ein Mobilfunksignal sein, es kann sich bei der Datennutzer- oder -verteilerstelle also bspw. auch um eine Mobilfunkstation handeln (z. B für 5G). Eine solche Datennutzer- bzw. -verteilerstelle kann auch ein Technikgebäude umfassen, durch welches das Datenkabel geführt wird. Das Anschlussgehäuse wird dann außerhalb dieses Technikgebäudes platziert, vgl. die vorstehenden Anmerkungen.

Prinzipiell können sich bei der Anwendung "Antenneneinheit bzw. -station" dieselben Vorteile ergeben, wie vorstehend anhand der Gebäude geschildert. Wird bspw. ein Ortsteil bzw. Straßenzug erschlossen (die Straße aufgegraben und ein Leerrohrstrang verlegt, vgl. im Detail die vorstehenden Anmerkungen zum "Bestand"), ist nicht nur für die Büro-/Wohngebäude eine Vorverlegung möglich, sondern bspw. auch zur Errichtung eines öffentlichen WLAN-Netzes. Dazu kann ein jeweiliges Anschlussgehäuse bspw. an, also neben einer Laterne platziert werden, bevorzugt direkt neben dem Laternenpfosten bzw. einem Sockel. Die Laterne kann dann später für die Antenneneinheit eine Halterungsfunktion übernehmen, zudem ist dort auch Stromanschluss verfügbar (für den Umsetzer bzw. Konverter). Es können aber auch andere Stellen entlang der Straße, als spätere Antennenposition veranlagt werden. Durch ein entsprechendes Platzieren von Anschlussgehäusen entlang der Straße, bspw. bei jeder oder jeder n-ten Laterne, kann ein Aufbau eines solchen WLAN-Netzes veranlagt werden. Es muss dann später nicht nochmals gesondert aufgegraben werden, vgl. die vorstehenden Anmerkungen. Auch wenn der Aufbau des WLAN-Netzes bereits beschlossen ist, können die z. B bei den Laternen oder auch anderen Stellen entlang der Straße platzierten Anschlussgehäuse das Prozedere vereinfachen. Analog der vorstehenden Schilderung können die Datenkabel nämlich in einem Arbeitsgang vom Knotenpunkt zu den einzelnen Anschlussgehäusen verlegt werden, die eigentliche Montage, z. B an den einzelnen Laternen, kann dann nach und nach erfolgen.

Wie bereits erwähnt wird zwischen der Datenkabel-Verzweigungsstelle und dem Anschlussgehäuse bevorzugt ein Leerrohr verlegt, das dann bspw. als Option zunächst unbelegt bleiben oder gleich zum Verlegen des Datenkabels genutzt werden kann. Das Leerrohr kann bspw. einen Außendurchmesser von höchstens 30 mm, 25 mm, 20 mm bzw. 15 mm haben (eine mögliche Untergrenze kann bspw. bei mindestens 7 mm bzw. 10 mm liegen). Bei einer Wandstärke von 1-2 mm steht ein Innenquerschnitt zur Verfügung, in dem das Datenkabel gut geführt ist. Das Leerrohr ist bevorzugt aus einem Kunststoffmaterial vorgesehen. Wird der Bodenaufbau hergestellt, legt sich das Bodenmaterial bevorzugt direkt an eine Außenmantelfläche des Leerrohres an, berührt es diese also.

Generell wird das Leerrohr auf einer Höhe innerhalb der fertigen Schichtaufbauhöhe der Straße bzw. des Bodens verlegt, also unterhalb der Oberkante der fertigen Deckschicht (Pflaster/Platten bzw. Asphalt). Es kann bspw. mindestens 10 cm, 20 cm, 30 cm bzw. 40 cm unterhalb letzterer verlaufen, mit möglichen Obergrenzen bei höchstens 1,5 m, 1,2 m bzw. 1 m. Bevorzugt liegt das Leerrohr über die gesamte Strecke zwischen Datenkabel-Verzweigungsstelle und Anschlussgehäuse im Erdreich, also unterhalb der Oberkante des Schichtaufbaus.

Wenn das Leerrohr belegt wird, kann das Datenkabel bspw. mit einer Überlänge in das Anschlussgehäuse verlegt werden. Im fertig in das Anschlussgehäuse verlegten Zustand soll z. B dann ein Endabschnitt des Datenkabels eine Länge von mindestens 1 m haben, wobei mindestens 2 m, 3 m, 4 m, 5 m, 6 m, 7 m, 8 m, 9 m bzw. 10 m weitere bevorzugte Untergrenzen sind. Mögliche Obergrenzen können bspw. höchstens 30 m, 20 m bzw. 15 m liegen. Konkret wird diese Länge zwischen der Eintrittsstelle, an welcher das Datenkabel aus dem Leerrohr in das Gehäuseinnere eintritt, bis zum Ende des Datenkabels genommen (dem Ende, das außerhalb des Leerrohres liegt, das also in einer Richtung von der Datenkabel-Verzweigungsstelle zu dem Anschlussgehäuse liegt).

Bei einer Variante kann die Überlänge, also der Endabschnitt, dann vorübergehend in dem Anschlussgehäuse, also im Gehäuseinneren abgelegt werden. Dazu wird der Endabschnitt bevorzugt in Schleifenform gebracht, womit sich zuverlässig minimale Biegeradien nicht unterschreiten lassen. Stege bzw. Haken, deren Abstand zueinander die Größe der Schleifenform vorgibt, können bspw. in einem Dichtbehälter und/oder einem Kabelgehäuse vorgesehen sein. Eine entsprechende Halterung für die Schleife kann aber bspw. auch an der Gehäuseinnenwand des Anschlussgehäuses selbst vorgesehen sein, ebenso ist eine herausnehm- und wiedereinsetzbare Kassette möglich.

Bevorzugt wird die Öffnung des Anschlussgehäuses nach dem schleifenförmigen Ablegen des Endabschnitts verschlossen, wird also der Deckel auf- bzw. eingesetzt. Wird das Datenkabel nur kurzzeitig abgelegt und bspw. noch am selben Arbeitstag weiter zum Gebäude bzw. Nutzer/Verteiler verlegt, kann auch ein schleifenförmiges Ablegen ohne Verschließen des Deckels Vorteile bieten, kann das Datenkabel nämlich in dem Gehäuseinneren etwas geschützt sein.

Die Verlegung zwischen Anschlussgehäuse und Gebäude bzw. Nutzer/Verteiler erfolgt bevorzugt ebenfalls im Erdreich, besonders bevorzugt wird hierfür zunächst wiederum ein Leerrohr (Anschluss-Leerrohr) verlegt, durch welches dann das Datenkabel geschoben werden kann. Bezüglich bevorzugter Details des "Anschluss-Leerrohres" wird auf die vorstehende Offenbarung zum "Leerrohr" verwiesen. Im Zuge einer Nachbelegung muss hierfür zwar ggf. nochmals ausgegraben werden, allerdings nur auf dem Grundstück, nicht im öffentlichen Raum (Gehweg/Straße), was einen entsprechend geringeren Aufwand bedeutet. Ist das Anschlussgehäuse direkt an der Außenwand platziert, muss mitunter auch gar kein Anschluss-Leerrohr verlegt werden, sondern kann der mit Überlänge im Anschlussgehäuse vorgehaltene Endabschnitt direkt in das Gebäude hinein verlegt werden (durch dessen Außenwand hindurch).

Generell kann das Datenkabel bzw. der Endabschnitt auch derart von dem Anschlussgehäuse zum Gebäude verlegt werden, dass das Ende des Endabschnitts dann im Gebäude liegt. Dort liegt also der Abschlusspunkt der Linientechnik. In diesem Fall erstreckt sich das Datenkabel dann unterbrechungsfrei von diesem im Gebäudeinneren über das Anschlussgehäuse zu der Datenkabel-Verzweigungsstelle (in der Regel über diese hinaus bis zu einem Knotenpunkt). "Unterbrechungsfrei" meint insoweit ohne Verbindungstelle dazwischen (insbesondere ohne Spleißstelle). Dieses Vorgehen kann bspw. insoweit von Vorteil sein, als dann in dem Anschlussgehäuse keine "komplexeren" Arbeiten am Datenkabel erforderlich sind, also bspw. kein Spleißgerät zu dem Anschlussgehäuse geschafft werden muss. Das Kabelgehäuse wird dann bspw. nur temporär zum Ablegen einer Überlänge genutzt.

Bei einer alternativ bevorzugten Ausführungsform wird das Anschlussgehäuse genutzt, um dort eine Verbindungsstelle herzustellen. Das Datenkabel, das sich von der Datenkabel-Verzweigungsstelle bis in das Anschlussgehäuse erstreckt, kann dort ebenfalls eine gewisse Überlänge haben, bspw. von mindestens 0,5 m, 1 m bzw. 1,5 m, was das Arbeiten vereinfachen kann. Die Überlänge wird dann jedoch typischerweise geringer als im vorherigen Beispiel sein, sie kann z. B höchstens 5 m, 4 m, 3 m bzw. 2 m betragen.

Wird das Gebäude bzw. der Nutzer/Verteiler tatsächlich angeschlossen, wird dann zwischen dem Gebäude (Nutzer/Verteiler) und dem Anschlussgehäuse ein weiteres Datenkabel verlegt, bevorzugt in einem Anschluss-Leerrohr (vgl. insofern die vorstehenden Anmerkungen). Dieses weitere Datenkabel wird dann mit dem Datenkabel (das von der Datenkabel-Verzweigungsstelle kommt) verbunden, was im Allgemeinen bspw. auch durch Spleißen erfolgen kann. Als Verbindungsort dient bevorzugt das Kabelgehäuse. "Verbinden" ist in diesem Zusammenhang auf das Herstellen einer funktionalen Verbindungsstelle zu lesen, über welche hinweg Daten übertragbar sind. Allgemein können die vorliegend in Rede stehenden Daten insbesondere Internetdaten sein, was auch Telekommunikationsdaten wie E-Mail etc. und Telefonie (VOIP) umfasst, ebenso auch Fernseh- bzw. allgemein Unterhaltungsdaten. Wie verschiedentlich erwähnt, ist das Datenkabel bevorzugt ein Glasfaserkabel, welches eine einzige oder bevorzugt mehrere Glasfasern aufweisen kann. Beim Verbinden wird im Falle mehrerer Glasfasern dann jeweils eine Glasfaser des einen Datenkabels mit einer Glasfaser des anderen Datenkabels verbunden.

Bei einer bevorzugten Ausführungsform ist zum Verbinden des Datenkabels, das von bzw. über die Datenkabel-Verzweigungsstelle kommt, und jenem für den Gebäudeanschluss ein Stecker vorgesehen, vorzugsweise am Kabelgehäuse. Das erstgenannte Datenkabel kann dann bspw. vom Netzbetreiber verlegt werden, bevorzugt zunächst ohne Stecker, was das Einschieben/Einblasen vereinfacht bzw. ermöglicht. Das Datenkabel wird dann also ohne Stecker am Ende durch das Leerrohr verlegt, bevorzugt über die Datenkabel-Verzweigungsstelle in Richtung des Anschlussgehäuses (insbesondere durch Einblasen von einem Knotenpunkt aus, siehe vorne). Anschließend wird das in das Anschlussgehäuse verlegte Ende für die Steckverbindung vorbereitet, wird also bspw. ein Stecker angespleißt (der dann an/in dem Kabelgehäuse angeordnet ist).

Das weitere Datenkabel, das zwischen Anschlussgehäuse und Nutzer/Verteiler bzw. Gebäude verlegt wird, ist bevorzugt an einem oder auch beiden Enden mit einem Stecker bzw. Aufsatz zum Ansetzen eines Steckers vorkonfektioniert. An einem vorkonfektionierten Ende lässt sich der Stecker dann ohne besonderes Spezialwerkzeug, insbesondere ohne Spleißgerät, zusammensetzen, exemplarisch wird auf die EP 2 482 109 A2 bzw. das Produkt DiaLink von Diamond verwiesen. Das vorkonfektionierte Ende lässt sich ohne das angesetzte Steckerteil gut durch das Anschluss-Leerrohr verlegen, danach wird das Steckerteil aufgesetzt und kann die Steckverbindung mit dem Datenkabel hergestellt werden (dies ist bspw. der Ablauf beim Einschieben des weiteren Datenkabels vom Gebäudeinneren her). Das weitere Datenkabel kann jedoch auch vom Anschlussgehäuse her eingeschoben werden, das Ende mit dem abnehm- und aufsetzbaren Steckerteil wird dann also ins Gebäudeinnere geschoben und dort zusammengesetzt. Das in dem Anschlussgehäuse angeordnete Ende kann in diesem Fall auch mit einem fertigen Stecker ausgestattet sein.

Generell wird das Leerrohr und/oder das Anschluss-Leerrohr zum Gehäuseinnenraum hin bevorzugt gedichtet. Ist durch das entsprechende Leerrohr ein Datenkabel verlegt, kann bspw. ein Dichtelement mit einer entsprechenden Durchlassöffnung vorgesehen sein (dieses dichtet gegen das Kabel und gegen das Leerrohr), bspw. als Teil eines Fittings. Ist noch kein Datenkabel verlegt, kann das Leerrohr z. B mit einem Blindstopfen bzw. -verschluss verschlossen sein. Das Abdichten der Leerrohre kann bspw. einem Wassereintritt (zum Gebäude oder Knotenpunkt hin) vorbeugen oder auch eine Barriere für Schleichgas darstellen. Speziell in Verbindung mit der vorstehend geschilderten "Auszugsicherung" kann das Abdichten die Sicherheit erhöhen, weil damit einem Verrutschen bzw. -setzen des Leerrohres vorgebeugt wird, bei dem sich die Abdichtung des Leerrohres lösen könnte. Besonders bevorzugt kann eine Integration der Leerrohr-Abdichtung in die Anschlussstelle sein, wird dort also das Leerrohr angesetzt und gehalten, sowie zugleich gedichtet (nicht bzw. nicht nur an der Außenwandfläche, sondern auch der Innenraum) z. B mit einem Fitting.

Bei einer bevorzugten Ausführungsform weist das Anschlussgehäuse eine Führungsvorrichtung auf, um ein von der Datenkabel-Verzweigungsstelle her eingeschobenes Datenkabel nach oben durch die Öffnung aus dem Anschlussgehäuse herauszuführen. Diese Führungsvorrichtung schließt an die Eintrittsstelle an, an welcher das Datenkabel in den Gehäuseinnenraum gelangt. Sie ist bevorzugt in ihrer Position am Anschlussgehäuse festgelegt, bspw. angeformt oder befestigt. Sie ist bevorzugt an der Anschlussstelle befestigt an welche gehäuseaußenseitig das Leerrohr gesetzt ist, vorzugsweise an dem Fitting. Die Führungsvorrichtung kann einen Kanal begrenzen, in dem das Ende des Datenkabels beim Einschieben in den Gehäuseinnenraum nach oben geführt wird. Dieser Kanal kann im Allgemeinen auch offen sein, bspw. eine U- bzw. V-Form haben, er kann jedoch auch von einem kurzen Rohrstück gebildet sein, bspw. einem Wellrohrstück. Als Führungsvorrichtung kann im Allgemeinen auch ein Leitblech oder dergleichen vorgesehen sein, funktional soll das Ende des Datenkabels entlang der Führungsvorrichtung nach oben gelenkt werden. Die Führungsvorrichtung kann damit einem Verfangen des Datenkabels im Gehäuseinneren bzw. Öffnungsrand etc. vorbeugen, also eine Beschädigung vermeiden helfen. Bevorzugt ist die Führungsvorrichtung im Gehäuseinnenraum auf das Fitting der Anschlussstelle aufgesteckt oder eingesteckt.

Wie bereits erwähnt, liegt die Datenkabel-Verzweigungsstelle bevorzugt an einem Leerrohrstrang, bildet sie nämlich einen Abzweig davon. Der Leerrohrstrang erstreckt sich entlang mehrerer Nutzer- bzw. Verteilerstellen. Im Falle der Antennenstationen bzw. -einheit passiert der Leerrohrstrang mehrere solche Einheiten bzw. Stationen. Im Falle der Gebäude erstreckt er sich entlang mehrerer Gebäudegrundflächen, die bereits bebaut sein können (Bestand) oder bebaut werden (Neubaugebiet). Der Leerrohrstrang wird typischerweise in einem Graben verlegt, der dann aufgefüllt wird; er kann sich insbesondere entlang einer Straße erstrecken, z. B am Straßenrand (bspw. unter dem Gehweg). Der Strang kann z. B in Form eines Bündels durchgehender Leerrohre vorgesehen sein, wobei zur Herstellung eines jeweiligen Abzweigs jeweils ein durchgehendes Leerrohr aufgetrennt und aus dem Strang abgezweigt wird. Das mit dem Auftrennen geschaffene Ende wird dann bevorzugt an bzw. in das Anschlussgehäuse geführt. Der andere mit dem Auftrennen gebildete Rohrabschnitt kann z. B ungenutzt in dem Bündel verbleiben.

Unabhängig von diesen Details ist im Falle des Leerrohrstranges eine "Verzweigungsstelle" dann z. B jener Punkt, von dem weg sich das Leerrohr nicht mehr parallel zum Strang erstreckt, sondern in einer Krümmung zum Anschlussgehäuse hin verläuft. Ein Abstand zwischen Datenkabel-Verzweigungsstelle und Anschlussgehäuse kann bspw. höchstens 15 m, 10 m, 5 m bzw. 3 m betragen, mögliche Untergrenzen können (davon unabhängig) bei z. B mindestens 0,5 m bzw. 1 m liegen.

Im Bestand kann bei der Erschließung dann bei einem oder auch mehreren der Gebäude direkt ein Leerrohr von der jeweiligen Datenkabel-Verzweigungsstelle zum Nutzer/Verteiler verlegt werden, also ohne Anschlussgehäuse dazwischen. So kann für jene Haushalte bzw. Eigentümer vorgegangen werden, die sich bereits bei der Erschließung für einen entsprechenden Datenanschluss entscheiden. Bei jenen Gebäuden, für die (vorerst) kein Datenanschluss gewünscht ist, wird jeweils ein Anschlussgehäuse platziert (und über ein Leerrohr von der Datenkabel-Verzweigungsstelle angeschlossen). Prinzipiell könnten dabei mehrere Gebäude auch über ein gemeinsames Anschlussgehäuse zusammengefasst werden (z. B zwei Gebäude), oder es wird jedem Gebäude ein eigenes Anschlussgehäuse zugeordnet. Bezüglich der Möglichkeiten zur Platzierung des Anschlussgehäuses (direkt an der Gebäudegrundfläche oder an der Grundstücksgrenze etc.) wird auf die vorstehenden Ausführungen verwiesen, gleiches gilt für die Möglichkeiten der Vorbereitung der Nachbelegung (Endabschnitt in Schleifenform im Gehäuseinneren vorgehalten, Stecker oder auch vorerst nur Leerrohranbindung).

Gemäß einer bevorzugten Ausführungsform liegt die Verzweigungsstelle also an einem Leerrohrstrang, der sich entlang mehrerer Datennutzer- oder Datenverteilerstellen erstreckt, wobei zu einem Teil der Datennutzer- oder Datenverteilerstellen ein jeweiliges Leerrohr direkt zwischen einer jeweiligen Datenkabel-Verzweigungsstelle an dem Leerrohrstrang und der Datennutzer- oder Verteilerstelle verlegt wird, und wobei bei einem anderen Teil der Datennutzer- oder Datenverteilerstellen ein jeweiliges Anschlussgehäuse platziert wird und zwischen einer jeweiligen Datenkabel-Verzweigungsstelle an dem Leerrohrstrang und dem jeweiligen Anschlussgehäuse ein jeweiliges Leerrohr für ein jeweiliges Datenkabel verlegt wird.

Im Neubaugebiet werden bevorzugt sämtliche Anschlüsse über ein Anschlussgehäuse geführt, es kann bspw. für jedes Gebäude ein eigenes Anschlussgehäuse vorgesehen werden oder es können auch mehrere Gebäude demselben Außengehäuse zugeordnet werden (bevorzugt zwei Gebäude je Anschlussgehäuse). Mit Blick auf die noch folgenden Bauarbeiten wird dieses dann bevorzugt an der Grundstücksgrenze platziert (auf der Straße oder auf dem Grundstück). Vorteilhaft kann z. B ein Positionieren des Anschlussgehäuses am Randstein sein, weil dieser auch in einem sehr frühen Ausbaustadium bereits einen Bezugspunkt definieren kann. Das "am Randstein" positionierte Anschlussgehäuse kann z. B auf denselben Unterbau bzw. dieselbe Tragschicht wie der Randstein gesetzt werden, also bspw. auf dieselbe verdichtete Schotterschicht. Bevorzugt wird eine den Randstein einfassende Betonfüllung genutzt, um das Anschlussgehäuse horizontal und/oder vertikal einzubetten oder ein Fundament zu schaffen, auf welches das Anschlussgehäuse aufgesetzt wird. Den Rand- bzw. Bordstein kann diese Betonfüllung nach vertikal unten und/oder horizontal einfassen, z. B als Fundament und Rückenstütze. Eine Positionierung an der Grundstücksgrenze, insbesondere am Randstein, kann nicht nur im Neubau, sondern auch im Bestand von Interesse sein.

Bei der Erschließung im Neubau kommen prinzipiell sämtliche vorstehend diskutierten Verlegetechniken (zwischen Anschlussgehäuse und dem dann errichteten Gebäude) in Betracht; im Anschlussgehäuse kann dann der Endabschnitt schleifenförmig abgelegt werden oder die Anbindung über eine Verbindungsstelle erfolgen, bspw. über einen Stecker vorbereitet werden. Von dem Knotenpunkt aus können die einzelnen Datenkabel jedenfalls in einem Arbeitsvorgang zu den unterschiedlichen Anschlussgehäusen verlegt werden. Bei einer Positionierung an der Grundstücksgrenze oder auch auf dem Grundstück muss dann bei einer nachträglichen Belegung der Gehweg/die Straße nicht nochmals aufgegraben werden.

Gemäß einer bevorzugten Ausführungsform "Neubau" liegt die Datenkabel-Verzweigungsstelle an einem Leerrohrstrang, der sich entlang mehrerer Datennutzer- oder Datenverteilerstellen erstreckt, nämlich entlang mehrerer Gebäude bzw. Gebäudegrundflächen, wobei jeder Gebäudegrundfläche ein Anschlussgehäuse zugeordnet wird, nämlich außerhalb der jeweiligen Gebäudegrundfläche platziert wird, und wobei für jedes Anschlussgehäuse zwischen einer jeweiligen Datenkabel-Verzweigungsstelle an dem Leerrohrstrang und dem jeweiligen Anschlussgehäuse ein jeweiliges Leerrohr für ein jeweiliges Datenkabel verlegt wird.

Offenbart sein soll auch ein Verfahren bzw. eine Verwendung zum Bereitstellen einer Datenkabelanbindung für ein Gebäude (vgl. die vorst. Definitionen), und zwar einer Anbindung an eine Datenkabel-Verzweigungsstelle (vgl. die vorst. Definitionen), wobei ein Anschlussgehäuse vorgesehen wird, das einen Gehäuseinnenraum aufweist, der von außen über eine Öffnung in dem Anschlussgehäuse zugänglich ist, wobei das Anschlussgehäuse zwischen der Datenkabel-Verzweigungsstelle und dem Gebäude positioniert wird, und zwar außerhalb einer Gebäudegrundfläche (vgl. die vorst. Definitionen), dabei aber nahe an der Gebäudegrundfläche, bspw. in einem Abstand von höchstens 1 m, bevorzugt direkt daran grenzend, wobei das Anschlussgehäuse auf einer vertikalen Höhe platziert wird, die innerhalb der fertigen Bodenaufbauhöhe liegt, wobei aber die Öffnung von oben zugänglich bleibt. Bevorzugt wird das Anschlussgehäuse so platziert, dass es an eine Außenwandfläche einer Kelleraußenwand des Gebäudes grenzt. Das Anschlussgehäuse wird in diesem Fall nicht zwingend im Bereich der Straße, also im Schichtaufbau der Straße angeordnet. Eine Positionierung im Schichtaufbau der Straße ist zwar möglich (z. B in der Stadt, Gebäudeaußenwand/Fassade direkt am Gehweg), aber nicht zwingend. Das Anschlussgehäuse kann bspw. auch auf einem Grundstück im Boden, also im Erdreich verlegt werden. Dabei könnte sich zwar prinzipiell die vorstehend geschilderte Setzungsproblematik ergeben, die Positionierung an der Gebäudegrundfläche schafft jedoch eine Stabilisierung, die Kelleraußenwand kann also abstützend wirken (dort stützt sich einerseits das Anschlussgehäuse selbst ab, andererseits ist auch das Erdreich etwas stabilisiert (zur Seite hin).

Die Positionierung an der Gebäudegrundfläche kann bspw. auch insoweit von Vorteil sein, als die Verbindung zwischen Anschlussgehäuse und Gebäude dann auch ganz ohne Aufgraben hergestellt werden kann. Durch die Gebäudeaußenwand kann gebohrt werden, durch diese Bohrung lässt sich das Datenkabel bzw. weitere Datenkabel (siehe vorne) dann ins Gebäude verlegen. Die Bohrung kann bspw. oberirdisch in die Gebäudeaußenwand eingebracht werden, etwa im Falle eines kellerlosen Gebäudes, oder im Falle eines unterkellerten Gebäudes auch unterirdisch, also in die Kelleraußenwand. Zu einer oberirdischen Bohrung kann das (weitere) Datenkabel bspw. in einem Kabelschacht entlang der Außenwandfläche geführt werden, die unterirdische Bohrung kann sich bevorzugt direkt in das Anschlussgehäuse erstrecken.

Das Anschlussgehäuse kann insgesamt bspw. eine vertikale Höhe von mindestens 40 cm bzw. 50 cm haben, mit möglichen (davon unabhängigen) Obergrenzen bei z. B höchstens 100 cm, 80 cm bzw. 70 cm. Der von der Seitenwand des Anschlussgehäuses begrenzte Gehäuseinnenraum des Anschlussgehäuses kann bspw. ein Innenvolumen von mindestens 20 l, 30 l, 40 l bzw. 50 l haben, mit möglichen (davon unabhängigen) Obergrenzen bei bspw. höchstens 100 l, 90 l, 80 l, 70 l bzw. 60 l. Die den Gehäuseinnenraum seitlich begrenzende Seitenwand kann bezogen auf die vertikale Richtung zusammengesetzt sein, das Anschlussgehäuse kann also aus einem Unter- und einem aufgesetzten Oberteil aufgebaut sein. An ersterem kann dann bspw. eine oder können mehrere Anschlussstellen für das bzw. die Leerrohre vorgesehen sein, die bspw. von Steckfittingen gebildet werden können. Auf ein solches Unter- ist dann ein Oberteil gesetzt, bspw. eine Straßenkappe. Das Anschlussgehäuse kann aber andererseits über seine vertikale Erstreckung auch durchgehend aus demselben Material, also monolithisch geformt sein. Es kann insbesondere ein durchgehendes Spritzgussteil sein. An die Seitenwand des Anschlussgehäuses konkret deren Außenwandfläche, legt sich im Zuge des Einbaus des Anschlussgehäuses in den Boden z. B das Bodenmaterial an, etwa Schüttgut wie Kies etc.

Die Erfindung betrifft auch eine Kabelanbindungseinheit, die sich als Gegenstand einer vorliegend offenbarten Verwendung ergibt, wenn also das Anschlussgehäuse in den Boden eingebaut und das Kabel angeschlossen wird etc.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: einen Aufbau mit einem Anschlussgehäuse, das aus einem Ober- und einem Unterteil zusammengesetzt ist, in schematischer Darstellung;
- Figur 2: verschiedene Möglichkeiten zur Positionierung von Anschlussgehäusen bei einer Erschließung von Gebäuden im Bestand;
- Figur 3a, b: eine erste Möglichkeit zur Weiterverlegung zwischen Anschlussgehäuse und Gebäude bzw. Verteiler/Nutzer;
- Figur 4: analog Figur 2 eine Möglichkeit zur Positionierung von Anschlussgegehäusen im Falle eines Neubaugebiets;
- Figur 5: eine zweite Möglichkeit zur Weiterverlegung zwischen Anschlussgehäuse und Gebäude bzw. Verteiler/Nutzer;
- Figur 6: eine WLAN-Einheit für öffentliches WLAN als Nutzer/Verteiler;
- Figur 7: einen Dichtbehälter in einer Schrägansicht;
- Figur 8: einen zur axialen Richtung senkrechten Schnitt durch den Dichtbehälter;
- Figur 9: einen Axialschnitt durch den Dichtbehälter;
- Figur 10: in schematischer Darstellung eine Anschlussgehäusevorrichtung mit Anschlussgehäuse, Dichtbehälter und Kabelgehäuse;
- Figur 11: in schematischer Darstellung eine weitere Anschlussgehäusevorrichtung mit Anschlussgehäuse, Dichtbehälter und Kabelgehäuse;
- Figur 12: einen Dichtbehälter mit angesetztem Ansetzteil für eine Anschlussgehäusevorrichtung gemäß Figur 11;
- Figur 13: den Dichtbehälter gemäß Figur 12 in einer geschnittenen Einzeldarstellung;
- Figur 14: das Ansetzteil gemäß Figur 12 in einer geschnittenen Einzeldarstellung;
- Figur 15: das Ansetzteil gemäß Figur 14 in einer Aufsicht;
- Figur 16: das Ansetzteil gemäß den Figuren 14 und 15 in einer Unteransicht;
- Figur 17: einen Befestigungsaufsatz zur Befestigung eines Leerrohrs an dem Ansetzteil der Figuren 14-16;
- Figur 18: den Befestigungsaufsatz gemäß Figur 17 im Schnitt;
- Figur 19: den am Ansetzteil angeordneten Befestigungsaufsatz der Figuren 17 und 18 im Schnitt;
- Figur 20: einen Dichtbehälter, der gemeinsam mit einem weiteren baugleichen Dichtbehälter im Anschlussgehäuse platziert werden kann;
- Figur 21: zwei baugleiche Dichtbehälter gemäß Figur 20 in einer Ansicht von unten;
- Figur 22: in schematischer Darstellung eine Kabelinstallation in den Dichtbehältern gemäß Figur 21;
- Figur 23: einen Dichtbehälter mit Ansetzteil und einem Elastomermantel;
- Figur 24: eine Detailansicht zu Figur 23, zur Illustration der Befestigung des Elastomermantels.

### Bevorzugte Ausführung der Erfindung

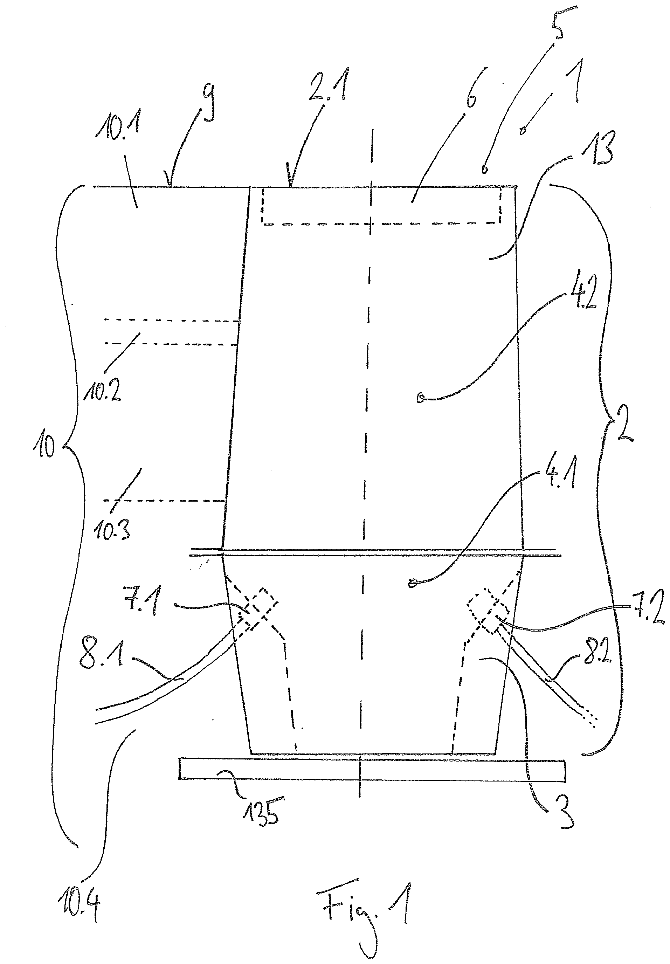

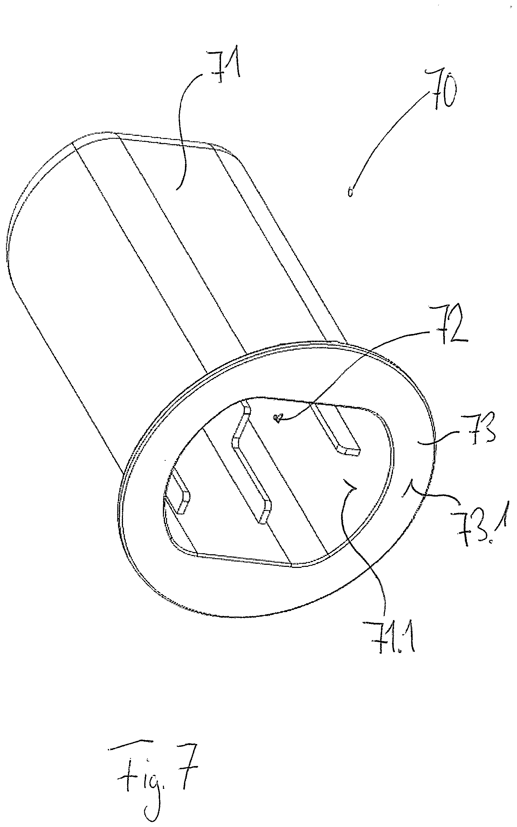

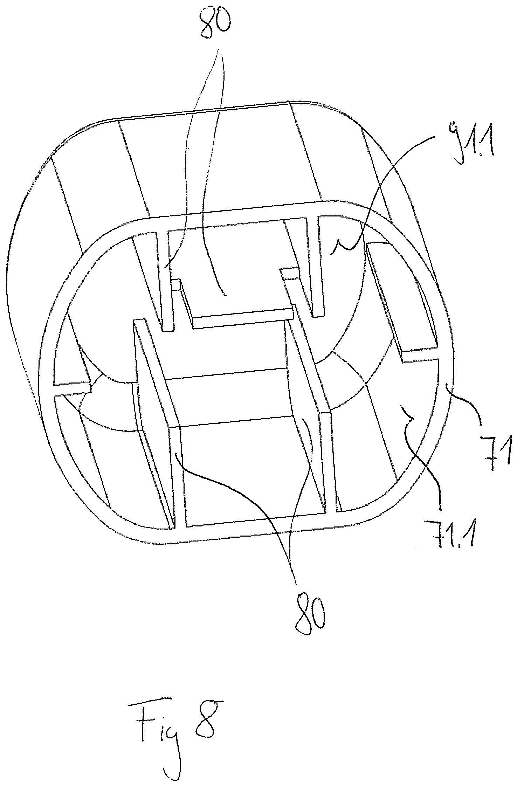

Figur 1 zeigt einen Aufbau 1 mit einem Anschlussgehäuse 2, das aus einem Unterteil 3 und einem Oberteil 13 zusammengesetzt ist. Bei dem Oberteil 13 handelt es sich um eine Straßenkappe, das Unterteil 3 wird im Detail anhand der Figuren 7-13 diskutiert. Das Anschlussgehäuse 2 begrenzt einen Gehäuseinnenraum 4, welcher sich der Gliederung in Unter- und Oberteil 3, 13 entsprechend in einen unteren Abschnitt 4.1 und einen oberen Abschnitt 4.2 gliedert. Oberseitig weist das Anschlussgehäuse 2 eine Öffnung 5 auf, über welche der Gehäuseinnenraum 4 zugänglich ist, und die vorliegend mit einem Deckel 6 verschlossen ist.

Das Anschlussgehäuse 2 ist mit Anschlussstellen 7.1, 7.2 ausgestattet. An die Anschlussstelle 7.1 ist ein Leerrohr 8.1 angesetzt, das sich von einem Leerrohrstrang zu dem Anschlussgehäuse 2 erstreckt. An die Anschlussstelle 7.2 wird, je nach Anwendung und Vorgehen im Einzelnen, ein Anschluss-Leerrohr 8.2 angesetzt, welches dann das Anschlussgehäuse 2 mit dem Verteiler/Nutzer, bspw. einem Gebäude verbindet.

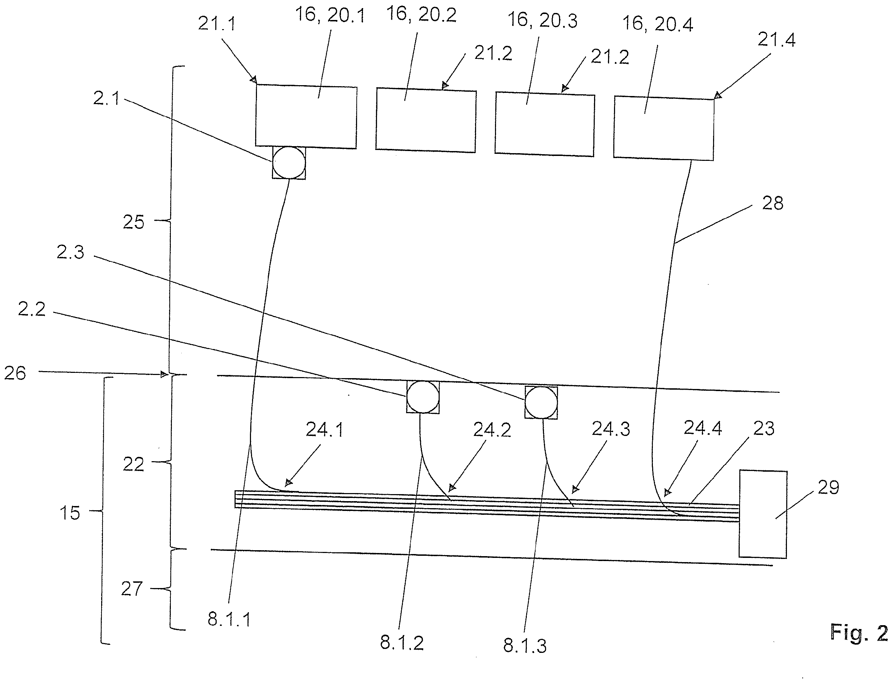

Das Anschlussgehäuse 2 wird außerhalb des Gebäudes im Schichtaufbau 10 der Straße 15 platziert (siehe auch Figur 2), sodass eine Oberkante 2.1 des Anschlussgehäuses 2 bündig mit einer Oberkante 9 des Schichtaufbaus 10 liegt, der in der linken Bildhälfte skizziert ist. Eine obere Schicht 10.1 kann bspw. die Pflasterschicht (Gehweg) oder Asphaltdeckschicht (Straße) sein, die Schicht 10.2 darunter kann entsprechend ein Bett oder eine Binderschicht sein. Die darunterliegenden Schichten 10.3, 10.4 stellen Tragschichten dar. Wird das Anschlussgehäuse 2 positioniert, ist die Lage der Oberkante 9 bereits bekannt (festgelegt), auch wenn der Schichtaufbau 10 mitunter erst deutlich später erstellt wird.

Figur 2 illustriert verschiedene Möglichkeiten bei einer Anwendung im Bestand. In der hier dargestellten Situation wird ein Straßenzug durch Glasfaserverlegung erschlossen. Schematisch sind als Datennutzerstellen 16 vier Gebäude 20.1-20.4 dargestellt, die jeweils auf einer Gebäudegrundfläche 21.1-21.4 stehen. Für die Erschließung wird der Gehweg 22 aufgebrochen und wird ein Graben ausgehoben, dieser ist in der schematischen Aufsicht nicht im Einzelnen dargestellt. In dem Graben wird ein Leerrohrstrang 23 verlegt, für jedes Gebäude 20.1-20.4 gibt es eine jeweilige Datenkabel-Verzweigungsstelle 24.1-24.4. Zur Illustration und Orientierung: in der Darstellung oberhalb des Gehwegs 22 erstrecken sich die jeweiligen Grundstücke 25, dazwischen liegt jeweils die Grundstücksgrenze 26. In der Darstellung unterhalb des Gehwegs 22 verläuft die Fahrbahn 27, die wie der Gehweg 22 Teil der Straße 15 ist.

Im Zuge der Erschließung dieses Straßenzugs hat sich hier exemplarisch nur ein Eigentümer für einen sofortigen Anschluss entschlossen, dies ist das Gebäude 20.4. In diesem Fall kann von der Datenkabel-Verzweigungsstelle 24.4 zu dem Gebäude 20.4 direkt ein Leerrohr 28 verlegt werden. Durch dieses wird dann das Datenkabel verlegt.

Für die Gebäude 20.1-20.3, für die (vorerst) kein Anschluss gewünscht ist, wird jeweils ein Anschlussgehäuse 2.1-2.3 platziert. Ferner wird, weil ja der Graben momentan ausgehoben ist, ein jeweiliges Leerrohr 8.1.1-8.1.3 zwischen der jeweiligen Datenkabel-Verzweigungsstelle 24.1-24.3 und dem jeweiligen Anschlussgehäuse 2.1-2.3 verlegt, vgl. auch die Zusammenschau mit Figur 1 zur Illustration. Der Graben kann dann aufgeschüttet, und es kann der Schichtaufbau 10 wiederhergestellt werden.

Soll dann später zu einem der Gebäude 20.1-20.3 doch ein Datenkabel verlegt werden, muss jedenfalls der Gehweg 22 nicht mehr aufgegraben werden. Durch das entsprechende Leerrohr 8.1.1-8.1.3 kann über die jeweilige Datenkabel-Verzweigungsstelle 24.1-24.3 von einem Knotenpunkt 29 aus ein Datenkabel eingeblasen werden, es kann der Deckel 6 des Anschlussgehäuses 2 geöffnet und das Datenkabel dort entgegengenommen werden. Bei dem Gebäude 20.1 sitzt das Anschlussgehäuse 2.1 direkt an der Gebäudegrundfläche 21.1, und zwar nicht im Bereich der Straße, sondern auf dem Grundstück 25. Bei der Platzierung direkt am Gebäude muss gar nicht mehr aufgegraben, sondern nur durch die Gebäudeaußenwand gebohrt werden. Bei den Gebäuden 20.2, 20.3 muss zur Erdverlegung zwar ein Stück auf dem Grundstück 25 ausgehoben werden, der Aufwand hierfür ist jedoch deutlich geringer als für das Aufgraben des Gehwegs 22.

Aufgrund ihrer Positionierung im Schichtaufbau 10 der Straße 15 sind die Anschlussgehäuse 2.2, 2.3 stabil gehalten, sie können nicht absacken bzw. verkippen. Damit kann einem Herausrutschen der Leerrohre 8.1, 8.2 und damit einem Abknicken des Datenkabels vorgebeugt werden. Ein einfach in die Erde gesetztes, also nicht in Tragschichten 10.3, 10.4 eingefasstes Anschlussgehäuse 2 wäre hingegen instabil, speziell Glasfaserkabel wären bruchgefährdet. Das Anschlussgehäuse 2.1 ist zwar nicht im Schichtaufbau 10 der Straße 15 vorgesehen, jedoch aufgrund der Positionierung direkt am Gebäude 20.1 stabilisiert.

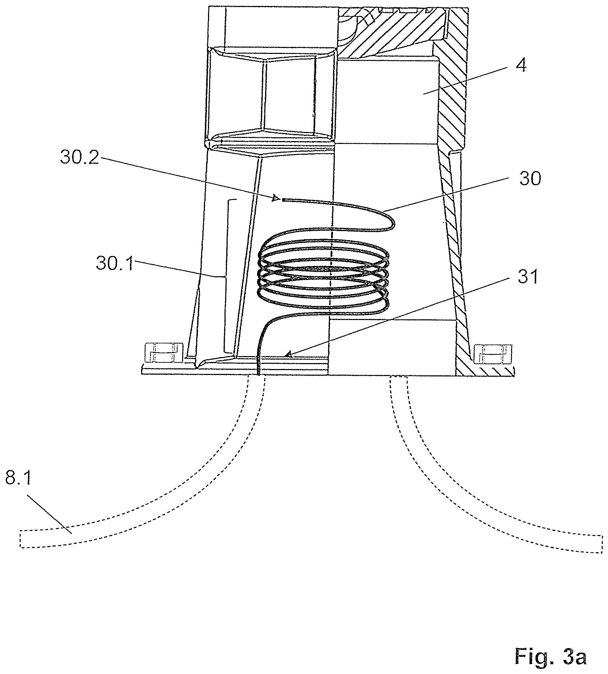

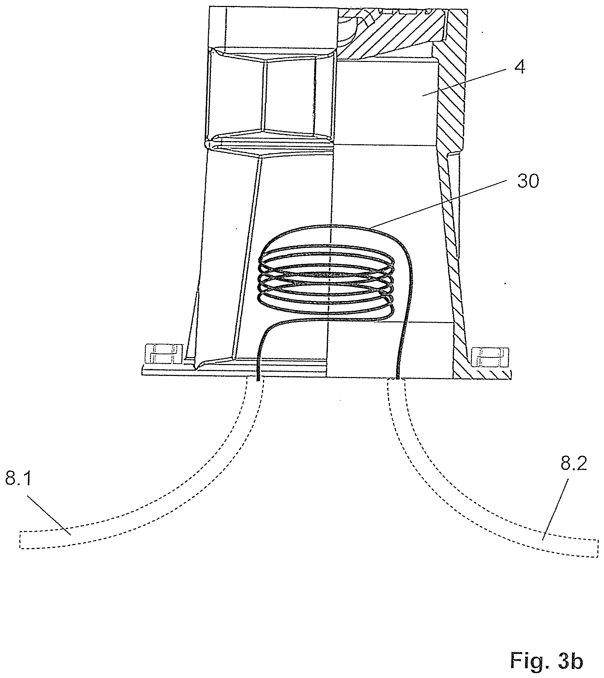

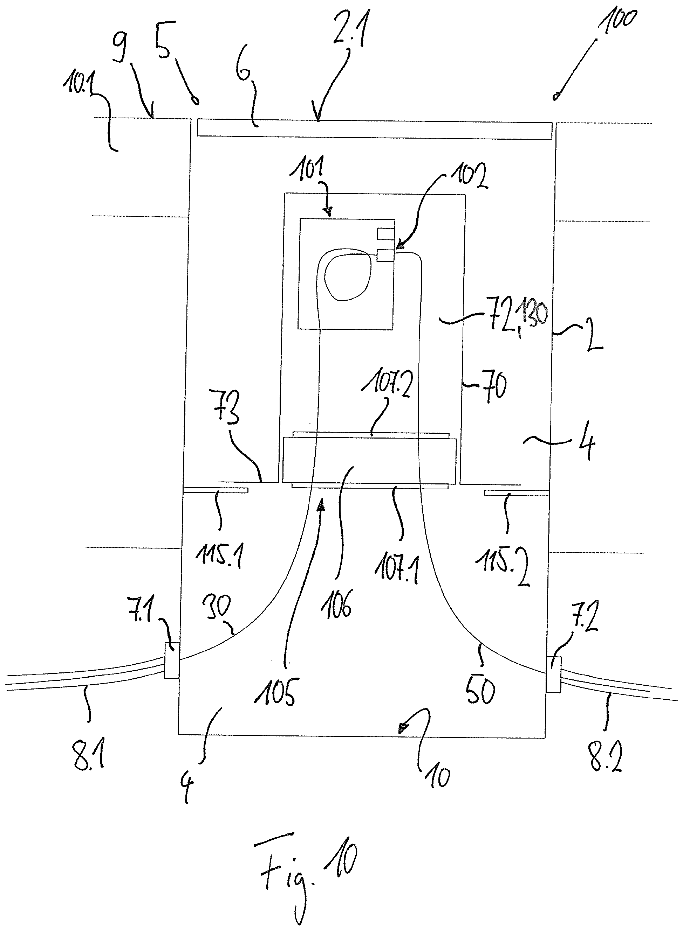

Die Figuren 3a, b illustrieren noch ohne Kabelgehäuse und Dichtbehälter, wie ein Datenkabel 30 durch das Leerrohr 8.1 in das Gehäuseinnere 4 verlegt wird, wobei der Übersichtlichkeit halber nur das Oberteil 13 (die Straßenkappe) ohne das Unterteil 3 dargestellt ist. Das Verlegen des Datenkabels 30 erfolgt in diesem Fall mit einer Überlänge, ein Endabschnitt 30.1 des Datenkabels 30 hat von einer Eintrittsstelle 31 in das Gehäuseinnere 4 weg genommen eine Länge von rund 10 m. Dieser Endabschnitt 30.1 könnte in einem Kabelgehäuse/Dichtbehälter (Fig. 10) abgelegt werden.

Figur 3b illustriert, wie der Endabschnitt 30.1 dann durch das vorab oder nachträglich angesetzte Anschluss-Leerrohr 8.2 weiter zur Datennutzer- bzw. -verteilerstelle 16 verlegt, also im Falle von Fig. 2 zum Gebäude. Konkret wird das Ende 30.2 des Datenkabels 30 in das Leerrohr 8.2 eingeschoben, im fertig installierten Zustand liegt es dann innerhalb des Gebäudes.

Der Zustand gemäß Figur 3a (Vorverlegung bis in das Anschlussgehäuse 2) kann in der Situation gemäß Figur 2 für die Anschlussgehäuse 2.1-2.3 im selben Arbeitsvorgang hergestellt werden, in dem auch der Anschluss durch das Leerrohr 28 gelegt wird. Es wäre dann also in jedes der Anschlussgehäuse 2.1-2.3 ein Datenkabel 30 vorverlegt, wobei der entsprechende Endabschnitt 30.1 bevorzugt in Schleifenform (Bruchgefahr) abgelegt wird bspw. in einem Dichtbehälter/Kabelgehäuse. Zusammengefasst gibt es also einerseits die Möglichkeit, dass die Anschlussgehäuse 2.1-2.3 bei der Vorverlegung bereits tatsächlich mit Datenkabeln 30 bestückt werden. Andererseits ist jedoch auch allein die Positionierung und Anbindung über die Leerrohre 8.1.1-8.1.3 dahingehend ausreichend, dass der Gehweg nicht mehr aufgegraben werden muss.

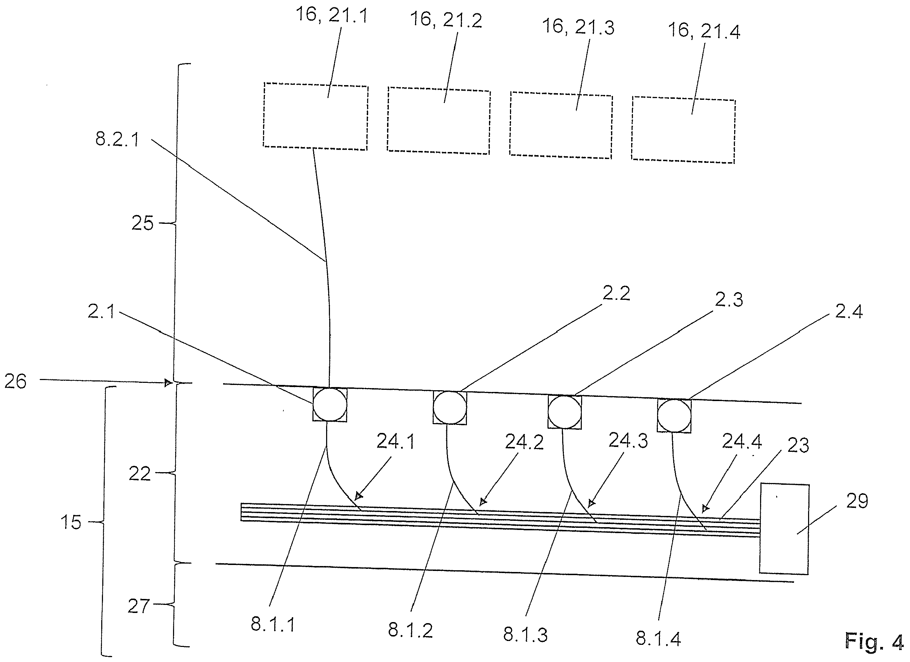

Figur 4 illustriert eine Anwendung in einem Neubaugebiet. Zur Orientierung sind wiederum der Gehweg 22 und die Fahrbahn 27 der Straße 15 eingezeichnet, wobei diese bei der Verlegung des Leerrohrstranges 23 noch gar nicht hergestellt sind. In diesem Fall sind auch noch keine Gebäude erstellt (jedenfalls noch nicht vollständig), weswegen nur die Gebäudegrundflächen 21.1-21.4 eingezeichnet sind.

Bei der Verlegung des Leerrohrstranges 23 wird an jeder Datenkabel-Verzweigungsstelle 24.1-24.4 ein jeweiliges Leerrohr 8.1.1-8.1.4 zu einem jeweiligen Anschlussgehäuse 2.1-2.4 verlegt. Die Anschlussgehäuse 2.1-2.4 werden in diesem Fall an den Grundstücksgrenzen 26, aber noch auf dem Gehweg 22 platziert. Dadurch werden die späteren Bauarbeiten auf den Grundstücken 25 nicht behindert.

Wird dann das erste Gebäude fertiggestellt, bspw. auf der Gebäudegrundfläche 21.1, wird zwischen dem Anschlussgehäuse 2.1 und diesem Gebäude ein Anschluss-Leerrohr 8.2.1 verlegt. Von dem Knotenpunkt 29 her wird dann das Datenkabel über die Datenkabel-Verzweigungsstelle 24.1 und das Anschlussgehäuse 2.1 bis in das Gebäude verlegt. In diesem Zuge werden dann auch zu den anderen Anschlussgehäusen 2.2-2.4 bereits die Datenkabel verlegt, sie können dort analog Figur 3a abgelegt werden. Es muss dann vorteilhafterweise nur einmal an dem Knotenpunkt 29 hantiert werden.

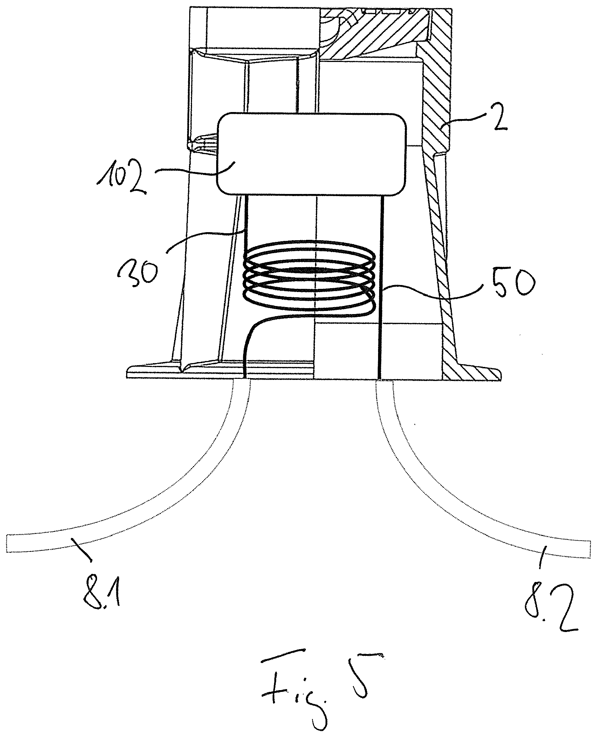

Figur 5 illustriert eine Alternative zu dem Vorgehen gemäß den Figuren 3a,b, nämlich die Herstellung der Nutzer/Verteiler-, insbesondere Gebäudeanbindung über ein weiteres Datenkabel 50. Dieses wird in dem Anschlussgehäuse 2 mit dem Datenkabel 30 verbunden, vorliegend durch Zusammenstecken über einen hier schematisch gezeigten Stecker 102 (vgl. Fig. 10 im Detail).

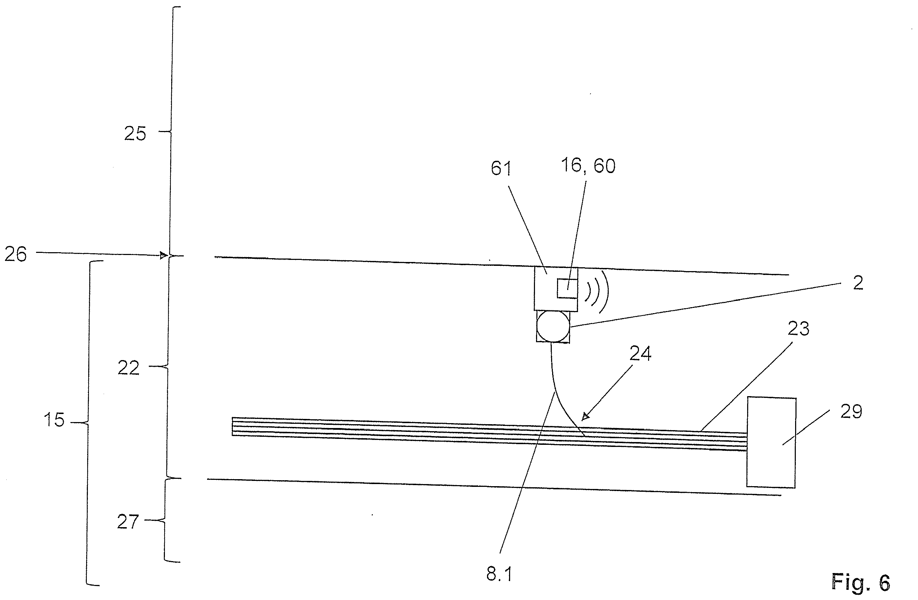

Figur 6 zeigt eine weitere Anwendungsmöglichkeit, wobei das Anschlussgehäuse 2 wiederum zwischen einer Datenkabel-Verzweigungsstelle 24 und einer Datennutzer- oder -verteilerstelle 16 platziert wird. Konkret handelt es sich bei letzterer um eine Funkeinheit 60, nämlich ein WLAN-Modul. Dieses ist bzw. wird zur Bereitstellung eines öffentlichen WLAN-Netzes in einem hier schematisch gezeigten Laternenpfosten 61 angeordnet. Bei der Erschließung des Straßenzugs, also wenn der Gehweg 22 aufgegraben ist und der Leerrohrstrang 23 verlegt wird, wird das Anschlussgehäuse 2 neben dem Laternenpfosten 61 platziert und über das Leerrohr 8.1 mit der Datenkabel-Verzweigungsstelle 24 verbunden.

Bei den übrigen, entlang der Straße 15 angeordneten (nicht dargestellten) Laternenpfosten wird in analoger Weise verfahren, wird also jeweils ein Anschlussgehäuse 2 platziert (nicht zwingend an jedem Laternenpfosten, es kann bspw. auch jeder zweite für eine hinreichende Netzabdeckung ausreichend sein). Werden dann später die Datenkabel von dem Knotenpunkt 29 her eingeblasen, können die Datenkabel analog der vorstehenden Schilderung (siehe "Neubau") in einem Arbeitsgang in jedes Anschlussgehäuse 2 verlegt werden, die Anbindung des jeweiligen Funkmoduls 60 kann dann nach und nach erfolgen. Die Anschlussgehäuse 2 lassen sich auch bei Laternenpfosten 61 platzieren, wenn diese vorerst noch gar nicht mit einem Funkmodul 60 ausgestattet sind bzw. werden sollen. Das Anschlussgehäuse 2 kann eine spätere Nachrüstung deutlich vereinfachen (kein Aufgraben des Gehwegs 22).

Bei der Variante gemäß Figur 6 kann in dem Anschlussgehäuse 2 analog Figur 5 verfahren werden (Steckverbindung), bevorzugt ist die Variante gemäß den Figuren 3a, b (Hindurchschleifen einer Überlänge). Das Anschlussgehäuse 2 kann hierfür bspw. geöffnet werden, und es kann dann eine Verbindung durch eine Gehäusewand des Anschlussgehäuses 2 und eine Sockelwand des Laternenpfostens 61 gebohrt werden. Selbstverständlich kann die Variante gemäß Figur 6 bspw. auch mit jener gemäß Figur 2 kombiniert werden, können bei der Erschließung der Straße 15 also sowohl an den vorerst nicht angeschlossenen Gebäuden 20.1-20.3 als auch an Laternenpfosten 61 (oder auch Ampeln etc.) Anschlussgehäuse 2 platziert werden.

Im Folgenden wird der Innenaufbau des Anschlussgehäuses 2 weiter im Detail diskutiert, zunächst ein Dichtbehälter, der in dem Anschlussgehäuse 2 platziert wird, Fig. 10 illustriert dann den gesamten Aufbau.

Figur 7 zeigt einen Dichtbehälter 70 in einer Schrägansicht von unten (ortsfestes Koordinatensystem). Zu erkennen ist eine Seitenwand 71 des Dichtbehälters 70, deren Innenwandfläche 71.1 begrenzt dessen Innenraum 72 seitlich. In diesen Innenraum 72 kann bzw. können Kabelgehäuse eingeschoben werden, vergleiche Figur 10. Über eine endseitige eingesetzte Pressdichtung (Figur 10) kann der Innenraum 72 wasserdicht verschlossen werden. Zur Stabilisierung ist an die Seitenwand 71 ein Flansch 73 angeformt, der auch eine Standfläche 73.1 bildet.

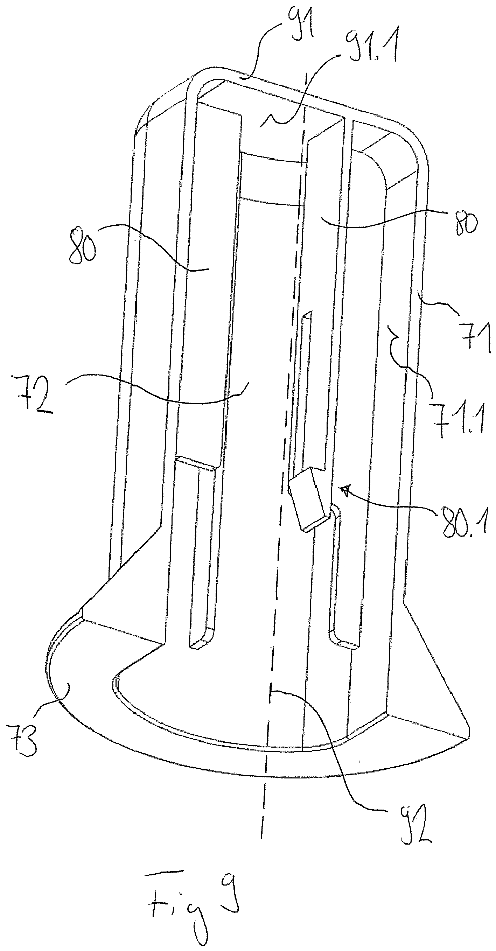

Wie aus der Zusammenschau der Figuren 7, 8 und 9 ersichtlich, sind an die Innenwandflächen 71.1, 91.1 Stege 80 angeformt, die ein Haltemittel für das eingesetzte Kabelgehäuse bilden. Dazu ist bspw. auch eine Rastnase 80.1 vorgesehen, welche das eingesetzte Kabelgehäuse dann formschlüssig hält. Bei der Darstellung gemäß Figur 9 beinhaltet die Schnittebene eine Mittenachse 92. In dieser Darstellung ist zu erkennen, dass die Seitenwand 71 mit der Seitenwandfläche 71.1 den Innenraum 72 seitlich begrenzt und in die Bodenwand 91 mit der Bodenwandfläche 91.1 den Innenraum 72 axial begrenzt.

Figur 10 zeigt in schematischer Darstellung die Anschlussgehäusevorrichtung 100 mit dem montierten Dichtbehälter 70, in dem ein Kabelgehäuse 101 angeordnet ist. Das Datenkabel 30 ist in dem Kabelgehäuse 101 an einen Stecker 102 angespleißt, konkret an eine Dose. In diese ist das weitere Datenkabel 50 mit einem (nicht dargestellten) Stecker eingesteckt, womit die Datenkabel 30, 50 miteinander verbunden sind.

Das Innenvolumen 72 des Dichtbehälters 70 ist abgedichtet, und zwar mit einem Dichtelement 105. Das Kabelgehäuse 101 ist in einem Luftvolumen 130 gehalten, aufgrund der Abdichtung sogar auch unabhängig von der Orientierung des Dichtbehälters 70. Bei dem Dichtelement 105 handelt es sich um eine Pressdichtung, die einen Elastomerkörper 106 und beidseits davon angeordnete Presskörper 107.1, 107.2 aufweist. Durch Spannen der Presskörper 107.1, 107.2 über (nicht dargestellte) Spannbolzen kann der Elastomerkörper 106 axial gestaucht und infolgedessen nach radial außen gegen die Innenwandfläche 71.1 des Dichtbehälters 70 angepresst werden. Die Datenkabel 30, 50 sind jeweils durch eine Durchgangsöffnung im Elastomerkörper geführt, der verspannte Elastomerkörper 106 legt sich auch dichtend an die Datenkabel 30, 50 an.

Der Dichtbehälter 70 ist zum unteren Ende 110 des Gehäuseinnenraums beabstandet montiert. Dazu sitzt der Flansch 73 auf Lagerelementen 115.1, 115.2 auf, die an der Seitenwand des Anschlussgehäuses 2 angeordnet sind.

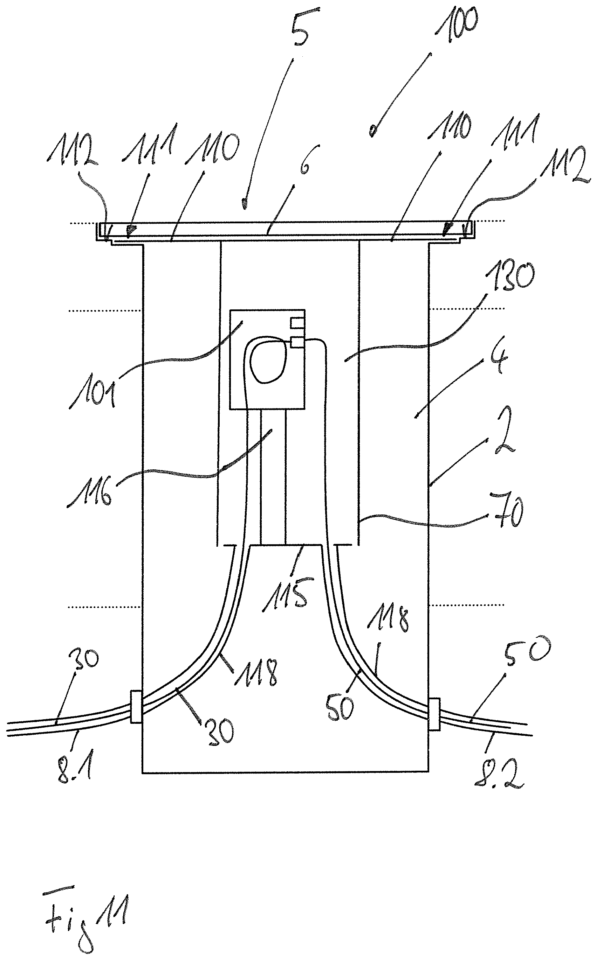

Figur 11 zeigt eine weitere Anschlussgehäusevorrichtung 100, bei welcher das Anschlussgehäuse 2 im Wesentlichen analog Figur 10 aufgebaut ist. Generell bezeichnen im Rahmen dieser Offenbarung dieselben Bezugszeichen Teile mit derselben oder vergleichbarer Funktion und wird insofern immer auch auf die Beschreibung zu den anderen Figuren verwiesen. Auch in diesem Fall ist ein Dichtbehälter 70 in dem Anschlussgehäuse 2 montiert. Im Unterschied zu Figur 10 ist der Dichtbehälter 70 jedoch an Vorsprüngen 110 aufgehängt, die an seinem oberen Ende angeordnet sind (im ortsfesten Koordinatensystem betrachtet, also am unteren Ende im Bezugssystem des Dichtbehälters). Die Vorsprünge 110 sitzen in Vertiefungen 111, sodass sie bündig in eine Anlagefläche 112 eingebettet sind.

Auf dieser Anlagefläche 112 liegt der Deckel 6 des Anschlussgehäuses 2 auf, der somit zugleich die Vorsprünge 110 in den Vertiefungen 111 lagefixiert.

Im Unterschied zu Figur 10 ist ferner keine Pressdichtung, sondern ein mit dem Dichtbehälter 70 verrastetes Ansetzteil 115 in dessen offenes Ende gesetzt. Dieses Ansetzteil 115 trägt ein Adapterteil 116, an dem das Kabelgehäuse 101 montiert ist. Im Gehäuseinnenraum 4 sind die Datenkabel 30, 50 in Leerrohren 118, in diesem Fall in Wellrohren geführt. Diese sind mit einer Überlänge vorgesehen (nicht dargestellt), werden also bei eingesetztem Dichtbehälter 70 schleifenförmig in dem Gehäuseinnenraum 4 abgelegt und ermöglichen ein Herausnehmen des Dichtbehälters 70 mit daran befestigtem Ansetzteil 115 und Leerrohren 118.

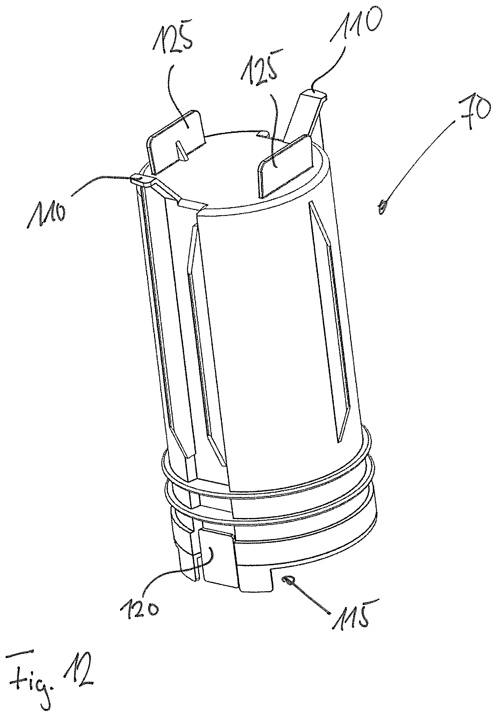

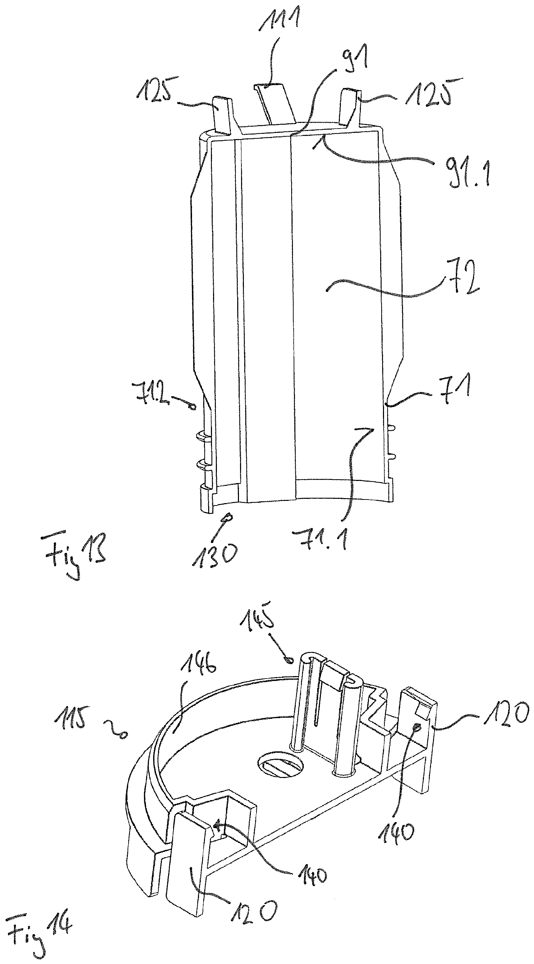

Figur 12 zeigt den Dichtbehälter 70 mit dem eingesetzten Ansetzteil 115 in einer Schrägansicht. Zusätzlich zu den Stegen 110 sind am oberen Ende (ortsfestes Koordinatensystem) Stege 125 angeordnet, an denen der Dichtbehälter 70 gegriffen und aus dem Anschlussgehäuse gehoben werden kann. Die Stege 110 können bspw. auch eine eingelegte Dichtmatte stabilisieren, also mittig abstützen. Das Ansetzteil 115 ist mit dem Dichtbehälter 70 verrastet, wozu an einem Steg 120 ein Rastmittel vorgesehen ist (siehe Figur 14 im Detail).

Die geschnittene Seitenansicht gemäß Figur 13 zeigt den Dichtbehälter 70 in einer Einzeldarstellung, also ohne Ansetzteil. Die Seiten- und Bodenwand 71, 91, bzw. deren Innenwandflächen 71.1, 91.1 begrenzen den Innenraum 72, also das Luftvolumen 130, in dem dann das Kabelgehäuse 101 gehalten ist.

Figur 14 zeigt das Ansetzteil 115, ebenfalls in einem Schnitt. Zu erkennen sind an den Stegen 120 angeordnete Rastnasen 140, die an der Außenwandfläche 71.2 der Seitenwand 71 verrasten (in Figur 13 rückseitig). Die Stege 120 sind wippenartig gelagert, durch einen Druck auf den unteren Bereich lässt sich die jeweilige Rastnase 140 aus dem Rastsitz lösen und damit das Ansetzteil 115 herausnehmen. Dabei ist, wie bereits anhand Figur 11 erläutert, das Kabelgehäuse 101 an dem Ansetzteil 115 montiert, es wird gemeinsam damit gehandhabt. In Figur 14 ist ein Befestigungsabschnitt 145 zu erkennen, an den das Adapterteil 116 (in Figur 14 nicht dargestellt) und damit das Kabelgehäuse 114 angesteckt wird. Ferner ist ein umlaufender Kragen 146 zu erkennen, der sich an der Innenwandfläche 71.1 abstützt und Stabilität schafft.

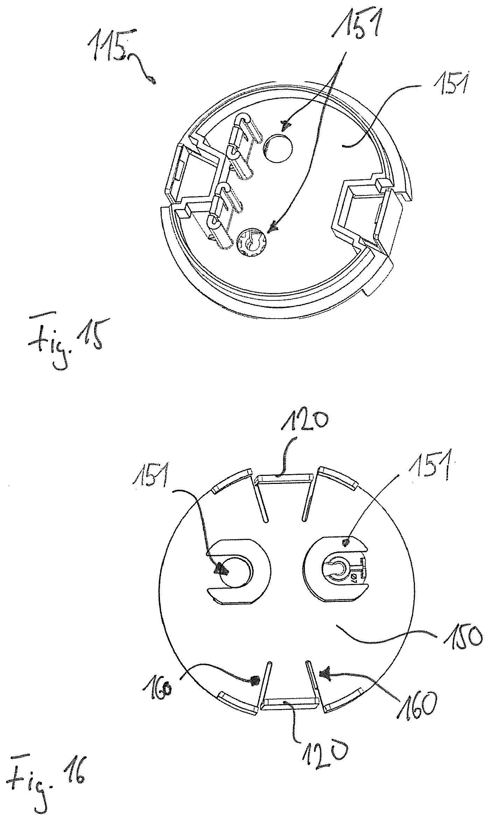

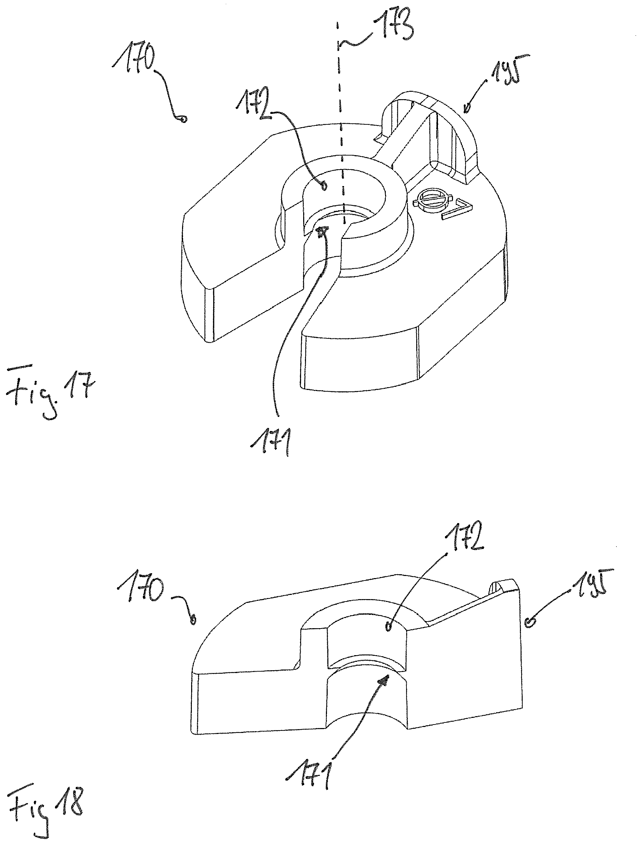

Figur 15 zeigt das Ansetzteil 115 nochmals im Gesamten, im Wesentlichen in einer Aufsicht (im ortsfesten Koordinatensystem). In dem Deckelabschnitt 150, welcher den Dichtbehälter 70 dann im Wesentlichen verschließt, sind zwei Durchgangsöffnungen 151 vorgesehen, durch welche die Datenkabel 30, 50 in den Dichtbehälter 70 eingeführt werden können. An einer der Durchgangsöffnungen 151 ist ein Befestigungsaufsatz zu erkennen, welcher der Befestigung des Wellrohres 118 an dem Ansetzteil 115 dient, vergleiche die Figuren 17-19 im Detail.

Figur 16 zeigt das Ansetzteil 115 in einer Ansicht von unten (ortsfestes Koordinatensystem). Hierbei ist insbesondere zu erkennen, dass der Deckelabschnitt 150 aufgrund der Federlagerung der Stege 120 von Trennfugen 160 durchzogen ist. Das Ansetzteil 115 verschließt den Dichtbehälter 70 also nicht dicht, bietet aber bspw. einen Schutz gegen ein Eindringen von Nagetieren etc. Ein wasserdichtes Abschließen ist insoweit nicht erforderlich, als das Kabelgehäuse 110 aufgrund der Topfform ohnehin in dem Luftvolumen 130 gehalten ist.

Die Figuren 17-19 illustrieren einen Befestigungsaufsatz 170, mit dem das Leerrohr 118 an dem Ansetzteil 115 befestigt wird. Alternativ zu einem Wellrohr lässt sich mit dem Befestigungsaufsatz 170 auch ein glattes Leerrohr, insbesondere ein Pipe befestigen. Der Befestigungsaufsatz 170 weist dazu eine Schneide 171 auf, die sich um eine vom Befestigungsaufsatz 170 gebildete Durchgangsöffnung 172 erstreckt (bezogen auf die Leerrohrachse 173 über rund 280°). Der Befestigungsaufsatz 170, der als Kunststoff-Spritzgußteil ausgebildet ist, umschließt die Öffnung 172 jedoch nicht vollständig, sodass er radial auf das Well- oder Leerrohr aufgeklipst werden kann. Dabei kommt die Schneide 171 in einer Vertiefung des Wellrohres zu liegen, oder sie dringt ein wenig in die Mantelwand ein bzw. drückt diese ein, es wird also jedenfalls ein axialer Formschluss geschaffen.

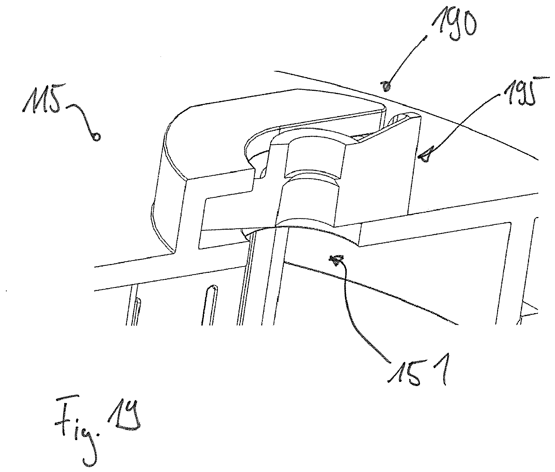

Der auf das Leerrohr 118 aufgesetzte Befestigungsaufsatz 170 ist also in seiner Axialposition am Leerrohr 118 festgelegt, umgekehrt kann er dieses auch axial in Position halten. Dazu sind an dem Ansetzteil 115 den Durchgangsöffnungen 151 zugeordnet Aufnahmen 190 ausgebildet, vergleiche den Schnitt gemäß Figur 19. In diese Aufnahme 190 wird der Befestigungsaufsatz 170 radial eingeschoben, womit er zugleich auf das (hier nicht dargestellte) Leerrohr 118 aufgeklipst wird. In der Aufnahme 190 ist der eingeschobene Befestigungsaufsatz 170 axial formschlüssig gehalten, aufgrund des Formschlusses zwischen seiner Schneide 171 und dem Leerrohr 118 wird auch dieses axial in Position gehalten. Um das Aufschieben bzw. -klipsen des Befestigungsaufsatzes 170 zu vereinfachen, ist er mit einem Andrückabschnitt 195 versehen, vergleiche auch die Gesamtansicht gemäß Figur 17 und den Schnitt gemäß Figur 18.

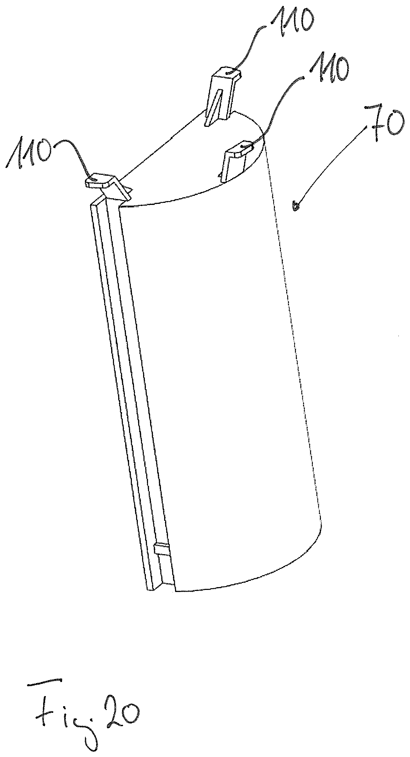

Figur 20 zeigt einen Dichtbehälter 70, der analog der vorstehenden Schilderung Vorsprünge 110 zum Einhängen in das Anschlussgehäuse 2 aufweist. Im Unterschied zu der Variante gemäß Figur 12 ist der Dichtbehälter 70 gemäß Figur 20 in vertikaler Richtung gesehen halbkreisförmig ausgebildet, sodass er gemeinsam mit einem weiteren, baugleichen Dichtbehälter im Anschlussgehäuses 2 platziert werden kann.

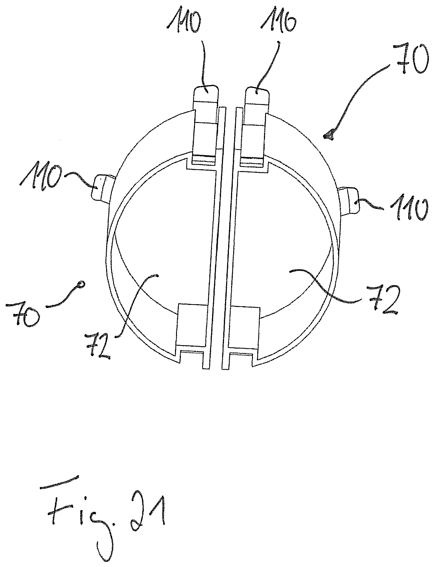

Figur 21 illustriert zwei entsprechend beieinander angeordnete Dichtbehälter 70, und zwar in einer Schrägansicht von unten (ortsfestes Koordinatensystem). Der Blick fällt also in den bzw. die Innenräume 72 der topfförmigen Dichtbehälter 70, in welchen dann jeweils ein Kabelgehäuse angeordnet wird. Ferner gibt es für jeden Dichtbehälter 70 ein hier nicht dargestelltes Ansetzteil, das analog der vorstehenden Schilderung zu den Figuren 14-19 am jeweiligen Dichtbehälter 70 verrastet wird und Durchgangsöffnungen zum Hindurchführen der Datenkabel bzw. Ansetzen der Leerrohre aufweist.

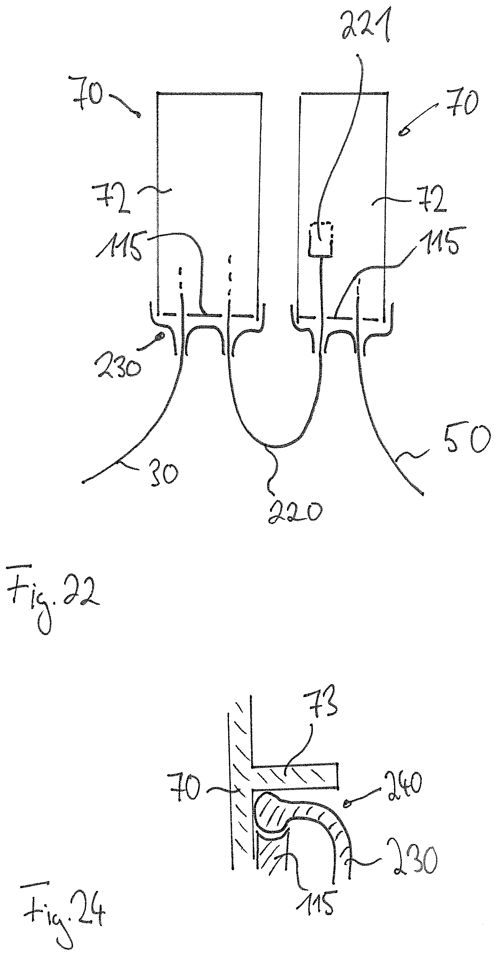

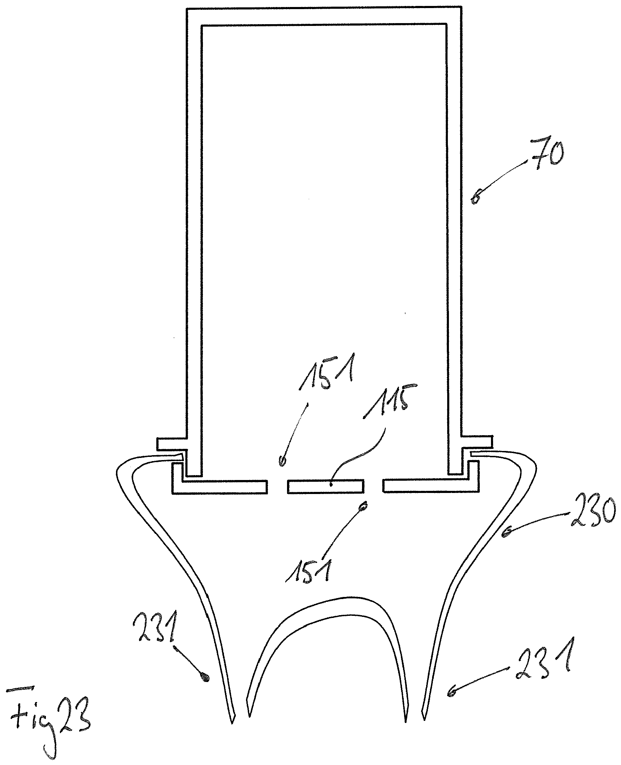

Figur 22 illustriert die Dichtbehälter 70 in schematischer Ansicht in der Anwendung. In einem ersten Schritt der Erschließung wird das Datenkabel 30 von der Datenkabel-Verzweigungsstelle in den ersten, in Figur 22 links angeordneten Dichtbehälter 70 hineinverlegt. Des Datenkabel 30 wird mit einem Datenkabelstück 220 verbunden, das an seinem entgegengesetzten Ende einen Stecker 221 aufweist. Die Verbindung erfolgt durch Spleißen, die Spleißstelle und Kabelüberlänge wird dann in einem (hier nicht dargestellten) Kabelgehäuse abgelegt, das im Innenraum 72 des Dichtbehälters 70 angeordnet ist. Nach diesem ersten Schritt der Erschließung wird der erste Dichtbehälter 70 verschlossen, nämlich mit dem Ansetzteil 115 und einem Elastomermantel 230, vergleiche Figuren 23 und 24 im Detail. Das Datenkabelstück 220 mit dem Stecker 221 hängt nach unten heraus oder kann zum Schutz auch bereits in den zweiten Dichtbehälter 70 hineinverlegt werden, die Anbindung des Anschlussgehäuses ist damit abgeschlossen (der erste Dichtbehälter 70 kann z. B auch plombiert werden).

In einem zweiten Schritt wird dann der Nutzer/Verteiler angebunden, bspw. ein Wohngebäude. Es wird also wie vorstehend erläutert das weitere Datenkabel 50 zwischen dem Anschlussgehäuse 2 und dem Nutzer/Verteiler verlegt. Zum Verbinden des weiteren Datenkabels 50 mit dem Datenkabel 30, also dem Stecker 221 des Kabelstücks 220, steht der zweite Dichtbehälter bzw. das darin angeordnete Kabelgehäuse (nicht dargestellt) zur Verfügung. Das Kabelgehäuse kann bspw. ein Steckergehäuse sein, in welches das weitere Datenkabel 50 hineinverlegt und über einen Spleiß mit einem (nicht dargestellten) Stecker verbunden wird. Dieser lässt sich dann mit dem Stecker 221 zusammenstecken. Bezüglich weiterer Möglichkeiten wird auf die Beschreibungseinleitung verwiesen.

Figur 23 zeigt einen topfförmigen Dichtbehälter 70 in einem schematischen Schnitt, an dessen offenes Ende analog der Beschreibung zu den Figuren 14-19 ein Ansetzteil 115 mit Durchtrittsöffnungen 151 gesetzt ist. Figur 23 illustriert zusätzlich einen Elastomermantel 230, der ebenfalls an das offene Ende des Dichtbehälters 70 gesetzt ist. der Elastomermantel 230 weist den Durchtrittsöffnungen 151 im Ansetzteil 115 entsprechend Tüllen 231 auf, also kurze rohrförmige Abschnitte, die sich dann dichtend an die Datenkabel bzw. Leerrohre anlegen. Der Elastomermantel 230 wird von dem Ansetzteil 115 kraft- und/oder formschlüssig am Dichtbehälter 70 gehalten, vergleiche die Detailansicht gemäß Figur 24. Ein Randabschnitt 240 des Elastomermantels 130 ist verdickt ausgeführt, also wulstförmig. Diese Wulstform drückt das am Dichtbehälter 70 verrastete Ansetzteil 115 mit einer Kontur formschlüssig gegen den Dichtbehälter 70, vorliegend gegen den Flansch 73. Alternativ zu dieser Befestigung könnte der Randabschnitt 240 des Elastomermantels 230 auch über den Flansch 73 gezogen werden, er wäre dann unabhängig vom Ansetzteil 115 am Dichtbilder 70 befestigt.

## Patentansprüche

1. Verwendung einer Anschlussgehäusevorrichtung (100), welche
ein zum Anschließen eines Kabels (30) vorgesehenes Kabelgehäuse (101),
einen zur Aufnahme des Kabelgehäuses (101) vorgesehenen Dichtbehälter (70), und
ein zur Aufnahme des Dichtbehälters (70) vorgesehenes Anschlussgehäuse (2) aufweist,
wobei das Anschlussgehäuse (2) einen Gehäuseinnenraum (4) begrenzt, der über eine Öffnung (5) in dem Anschlussgehäuse (2) zugänglich ist,
bei welcher Verwendung das Anschlussgehäuse (2) solchermaßen in einen Boden eingebaut wird, dass der Gehäuseinnenraum (4) von oben über die Öffnung (5) in dem Anschlussgehäuse (2) zugänglich bleibt,
wobei ein in dem Boden verlegtes Kabel (30) in das Anschlussgehäuse (2) hineinverlegt und an das Kabelgehäuse (101) angeschlossen wird,
und wobei dann der Dichtbehälter (70) mit dem Kabelgehäuse (101) darin solchermaßen in dem Anschlussgehäuse (2) angeordnet wird, dass der Dichtbehälter (70) das Kabelgehäuse (101) in einem Luftvolumen (130) hält.

2. Verwendung nach Anspruch 1, bei welcher sich das Kabelgehäuse (101) außerhalb des Gehäuseinnenraums (4) des Anschlussgehäuses (2) befindet, wenn das Kabel (30) an das Kabelgehäuse (101) angeschlossen wird und sich der Dichtbehälter (70) außerhalb des Gehäuseinnenraums (4) des Anschlussgehäuses (2) befindet, wenn das Kabelgehäuse (101) in den Dichtbehälter (70) eingesetzt wird.

3. Verwendung nach einem der vorstehenden Ansprüche, bei welcher der Dichtbehälter (70) topfförmig, also zu einer Seite hin offen ist.

4. Verwendung nach Anspruch 3, bei welcher an den Dichtbehälter (70), nämlich an dessen offene Seite, ein Ansetzteil (115) angesetzt und an dem Dichtbehälter (70) befestigt wird, vorzugsweise damit verrastet wird.

5. Verwendung nach Anspruch 4, bei welcher das an den Dichtbehälter (70) angesetzte Ansetzteil (115) das in dem Dichtbehälter (70) angeordnete Kabelgehäuse (101) zumindest abstützt.

6. Verwendung nach Anspruch 4 oder 5, bei welcher, bevor das Ansetzteil (115) an den Dichtbehälter (70) angesetzt wird, das Kabelgehäuse (101) an das Ansetzteil (115) angesetzt und an dem Ansetzteil (115) befestigt wird, wobei anschließend das Ansetzteil (115) mit dem daran befestigten Kabelgehäuse (101) an den Dichtbehälter (70) angesetzt wird.

7. Verwendung nach einem der Ansprüche 4 bis 6, bei welcher an den Dichtbehälter (70), nämlich an dessen offene Seite, ein Elastomermantel (230) angesetzt wird, durch den das Kabel (30) hindurch in den Dichtbehälter (70) hinein verlegt wird

8. Verwendung nach einem der vorstehenden Ansprüche, bei welcher das Kabel (30) in dem Anschlussgehäuse (2) in einem Leerrohr (118) verlegt wird, wobei ein Ende des Leerrohres (118) relativ zu dem Dichtbehälter (70) lagefixiert wird.

9. Verwendung nach Anspruch 8, bei welcher das Leerrohr (118), in dem das Kabel (30) in dem Anschlussgehäuse verlegt wird, eine Überlänge hat und der Dichtbehälter (70) mit dem daran lagefixierten Ende des Leerohres (118) nach oben durch die Öffnung (5) in dem Anschlussgehäuse (2) aus dem Gehäuseinnenraum (4) herausgenommen wird.

10. Verwendung nach einem der Ansprüche 4 bis 7 in Verbindung mit Anspruch 8 oder 9, bei welcher das Ende des Leerrohrs (118) relativ zu dem Dichtbehälter (70) lagefixiert wird, indem es an dem Ansetzteil (115) befestigt wird, und zwar mittels eines Befestigungsaufsatzes (170) mit einer Schneide (171), wobei der Befestigungsaufsatz (170) solchermaßen auf das Leerrohr (118) gesetzt wird, dass die Schneide (171) axial formschlüssig an dem Leerrohr (118) sitzt und der Befestigungsaufsatz (170) das Leerrohr (118) axial in Position hält.

11. Verwendung nach Anspruch 2 und einem der Ansprüche 3 bis 7, optional zusätzlich auch in Verbindung mit einem der Ansprüche 8 bis 10, bei welcher der topfförmige Dichtbehälter (70), nachdem das Kabelgehäuse (101) in den Dichtbehälter (70) eingesetzt wurde, mit der offenen Seite nach unten in dem Gehäuseinnenraum (4) des Anschlussgehäuses (2) angeordnet wird.

12. Verwendung nach einem der vorstehenden Ansprüche, bei welcher an dem Dichtbehälter (70) ein Vorsprung (111) vorgesehen ist, an dem der Dichtbehälter (70) in dem Anschlussgehäuse (2) aufgehängt wird.

13. Verwendung nach einem der vorstehenden Ansprüche, bei welcher in dem Anschlussgehäuse (2) ein zweiter Dichtbehälter (70) angeordnet wird oder ist, vorzugsweise mit einem zweiten Kabelgehäuse darin.

14. Verwendung nach einem der vorstehenden Ansprüche, bei welcher das Kabel (30) ein Datenkabel ist, das sich von einer Datenkabel-Verzweigungsstelle (24) zu dem Anschlussgehäuse (2) erstreckt, wobei das Datenkabel (30) oder ein weiteres Datenkabel (50) von dem Anschlussgehäuse (2) zu einer Datennutzer- oder Verteilerstelle (16) verlegt wird.

15. Kabelanbindungseinheit, die sich aus einer Verwendung nach einem der vorstehenden Ansprüche ergibt, mit
einer Anschlussgehäusevorrichtung (100),
die ein zum Anschließen eines Kabels (30) vorgesehenes Kabelgehäuse (101),
einen zur Aufnahme des Kabelgehäuses (101) vorgesehenen Dichtbehälter (70), und
ein zur Aufnahme des Dichtbehälters (70) vorgesehenes Anschlussgehäuse (2) aufweist,
wobei das Anschlussgehäuse (2) einen Gehäuseinnenraum (4) begrenzt, der über eine Öffnung (5) in dem Anschlussgehäuse (2) zugänglich ist,
wobei das Anschlussgehäuse (2) solchermaßen in einen Boden eingebaut ist, dass der Gehäuseinnenraum (4) von oben über die Öffnung (5) in dem Anschlussgehäuse (2) zugänglich ist,
und wobei ein in dem Boden verlegtes Kabel (30) in das Anschlussgehäuse (2) hineinverlegt und an das Kabelgehäuse (101) angeschlossen ist,
und wobei der Dichtbehälter (70) mit dem Kabelgehäuse (101) darin solchermaßen in dem Anschlussgehäuse (2) angeordnet ist, dass der Dichtbehälter (70) das Kabelgehäuse (101) in einem Luftvolumen (130) hält.
